# EUROPEAN PATENT APPLICATION

(11) **EP 4 806 777 A1**
(43) Date of publication of application: **16.09.2026**
(21) Application number: 24889074.1
(22) Date of filing: 05.11.2024
(51) Int. Cl.: B63B 11/00, B63B 15/00, B63J 2/04, B63J 2/10, F24F 8/133, F24F 8/95, F24F 13/10, F24F 7/007, B01D 53/58, B01D 53/78

(54) **SHIP USING AMMONIA AS FUEL AND CONTROL METHOD THEREOF**

(30) Priority: 06.11.2023 KR 20230151408; 23.02.2024 KR 20240026575; 23.02.2024 KR 20240026576; 23.02.2024 KR 20240026577; 23.02.2024 KR 20240026578; 23.02.2024 KR 20240026584; 23.02.2024 KR 20240026585; 23.02.2024 KR 20240026586; 23.02.2024 KR 20240026587
(71) Applicant: HD Korea Shipbuilding & Offshore Engineering Co., Ltd., Seongnam-si, Gyeonggi-do 13553 (KR); HD Hyundai Mipo Co., Ltd., Ulsan 44113 (KR)
(72) Inventor: YOO, Jin Hyung, Seongnam-si, Gyeonggi-do 13553 (KR); NAM, Hyun Joon, Seongnam-si, Gyeonggi-do 13553 (KR); AHN, Yeong Jong, Seongnam-si, Gyeonggi-do 13553 (KR); LEE, Chang Woo, Seongnam-si, Gyeonggi-do 13553 (KR); OH, Kwang Seok, Ulsan 44113 (KR); KANG, Jae Woon, Ulsan 44113 (KR); LEE, Jung Moon, Ulsan 44113 (KR); IM, Sung Hyuk, Ulsan 44113 (KR); KANG, Bong Chang, Ulsan 44113 (KR)
(74) Representative: Murgitroyd & Company
(86) International application number: PCT/KR2024/017226
(87) International publication number: WO 2025/100886

(57) **Abstract**

The present invention provides a ship comprising: a fuel tank in which ammonia fuel is stored; an engine which is supplied with ammonia stored in the fuel tank and in which the ammonia is combusted; a first tank in which liquid ammonia discharged from the engine is collected; and a second tank in which gaseous ammonia discharged from the engine is collected, wherein the gaseous ammonia is collected in the second tank after the liquid ammonia is collected in the first tank.

## Description

### [Technical Field]

The present disclosure relates to a vessel using ammonia as a fuel and a control method thereof.

### [Background]

In general, a vessel is propelled using a diesel engine that generates a driving force using diesel oil, a gas engine that generates a driving force using a gas such as LNG, a dual fuel engine that generates a driving force by mixing diesel oil and gas, and the like.

Recently, as the demand for eco-friendly/high-efficiency engines due to the strengthening of IMO environmental regulations increases, research on propulsion systems using various fuels is actively underway.

Ammonia is attracting attention as an eco-friendly fuel because it does not contain carbon.

The technology of vessels using ammonia as fuel is posted in Korean Patent Application Publication No. 10-2022-0156475. However, ammonia may cause an ammonia slip phenomenon in which ammonia that is not burned inside the engine is mixed in exhaust gas and discharged to the atmosphere, and the amount of nitrogen oxide (NOx) is increased according to ammonia combustion, thereby contaminating the environment. In addition, since ammonia contains toxic substances, it is necessary to prepare various countermeasures for the safety of operators.

### [Summary]

### [Technical Purpose]

The present disclosure is to solve the above problems, and a purpose of the present disclosure is to provide a vessel using ammonia, which can efficiently use ammonia, as fuel, and a method for controlling the same.

In addition, a purpose of the present disclosure is to provide a vessel using ammonia as a fuel and a method for controlling the same, in which an operator can safely live when the vessel is using ammonia.

### [Technical Solutions]

In order to achieve the above purpose, the present disclosure provides a vessel which comprises: a fuel tank in which ammonia fuel is stored; an engine configured to receive ammonia stored in the fuel tank and combust the received ammonia; a first tank in which liquid ammonia discharged from the engine is collected; and a second tank in which gaseous ammonia discharged from the engine is collected, wherein the liquid ammonia is collected in the first tank, and then the gaseous ammonia is collected in the second tank.

When a concentration of the gaseous ammonia collected in the second tank decreases to a value lower than or equal to a predetermined reference value, the gaseous ammonia of a low concentration is collected in a flow path different from a flow path connected to the first tank and the second tank.

The vessel comprises: a first valve configured to open and close a flow path extending from the engine to the first tank; and
a second valve configured to open and close a flow path extending from the engine to the second tank.

The second valve closes the flow path when the first valve opens the flow path.

While the fuel is supplied to the engine from the fuel tank, each of the first valve and the second valve may close each of the flow paths.

The vessel comprises a third valve configured to open and close a flow path extending from the second valve to the second tank.

While the gaseous ammonia of a high concentration is discharged from the engine, the second valve may open the flow path, and the third valve may open the flow path.

While gas ammonia of a low concentration is discharged from the engine, the second valve may open the flow path, and the third valve may close the flow path.

While the ammonia is discharged from the engine, the second valve may close the flow path, and after a predetermined time has elapsed, the second valve may open the flow path.

While the gaseous ammonia is discharged from the engine, the third valve may open the flow path, and after a predetermined time has elapsed, the third valve may close the flow path.

The pressure of the first tank may be maintained at a higher level than the pressure of the second tank.

In order to maintain the pressure of the first tank, the vessel may include a flow path for supplying nitrogen to the first tank.

The vessel may include a flow path for guiding the ammonia collected in the first tank to the fuel tank.

The present disclosure provides a method for controlling a vessel, wherein the vessel in which ammonia fuel is burned in an engine comprises: a fuel tank in which ammonia fuel is stored; an engine configured to receive ammonia stored in the fuel tank and combust the received ammonia; a first tank in which liquid ammonia discharged from the engine is collected; and a second tank in which gaseous ammonia discharged from the engine is collected, wherein the method for controlling the vessel comprises a first step in which the engine is driven with ammonia fuel and is stopped; a second step in which liquid ammonia remaining in the engine is guided to the first tank; and a third step in which gaseous ammonia remaining in the engine is collected to the second tank.

The method includes, after the third step, a fourth step of discharging gaseous ammonia to a flow path other than a flow path to the first tank and the second tank, wherein a concentration of gaseous ammonia discharged in the fourth step may be lower than a concentration of gaseous ammonia discharged in the third step.

The method includes, after the second step, returning liquid ammonia stored in the first tank to the fuel supply pump.

The second step includes: injecting nitrogen gas into the first tank to maintain a pressure of the first tank at a level equal to or higher than a predetermined pressure.

The second step includes: injecting nitrogen gas into the engine such that liquid ammonia remaining in the engine may be discharged from the engine.

The present disclosure provides a vessel comprising: a fuel tank for storing therein ammonia fuel; a pump for providing a pressure for flowing ammonia from the fuel tank; an engine for receiving the ammonia stored in the fuel tank and combusting the same; a bypass flow path for guiding the ammonia in the fuel tank so as to bypass the engine; and a heat exchanger provided in the bypass flow path and performing heat exchange with the ammonia discharged from the engine, wherein the ammonia in the fuel tank selectively flows to the engine or the heat exchanger under the pressure provided from the pump.

The vessel may include a valve for opening and closing a flow path through which ammonia flows from the fuel tank to the engine.

When ammonia is supplied to the engine, the valve may open the flow path.

When ammonia is supplied to the heat exchanger, the valve may close the flow path.

In the heat exchanger, the ammonia discharged from the engine and the ammonia guided from the fuel tank to the heat exchanger are not mixed with each other, but independently flow and undergo the heat-exchange.

Ammonia guided from the fuel tank to the heat exchanger may be returned to the fuel tank.

The vessel may include a receiver in which ammonia guided from the engine to the heat exchanger is stored.

The liquid ammonia stored in the receiver may be returned to the fuel tank, and the gaseous ammonia stored in the receiver may be discharged through the vent mast.

The vessel may include a first tank in which liquid ammonia discharged from the engine is collected, and the gaseous ammonia collected in the first tank may be guided to the heat exchanger.

The vessel may include a second tank in which gaseous ammonia discharged from the engine is collected, and the gaseous ammonia collected in the second tank may be guided to the heat exchanger.

Gaseous ammonia discharged from the engine may be guided to the heat exchanger without flowing through a tank for storage.

The present disclosure provides a vessel comprising: a fuel tank for storing therein ammonia fuel; an engine for burning the ammonia stored in the fuel tank; an exhaust flow path for discharging the ammonia discharged from the engine to the outside; a valve for controlling the degree of opening of the exhaust flow path; a controller for controlling the valve; and a vent mast for discharging the ammonia having flowed through the valve to the outside.

The controller may reduce the opening degree of the valve as the concentration of ammonia discharged from the exhaust flow path increases.

The controller may divide the concentration of ammonia in the order of low concentration, medium concentration, and high concentration, and reduce the opening degree of the valve by half at a switching therebetween.

The low concentration may mean a concentration generated during a general stop such as a fuel replacement, the medium concentration may mean a concentration generated during an emergency stop due to an engine problem, and the high concentration may mean a concentration generated during an emergency such as a fire.

The vessel may include a wind speed measuring unit configured to measure an external wind speed, and the controller may control the valve according to the wind speed sensed by the wind speed measuring unit.

The controller may increase the opening degree of the valve as the wind speed measured by the wind speed measurement unit increases.

The controller may divide the wind speed measured by the wind speed measuring unit in the order of high speed, medium speed, and low speed, and reduce the opening degree of the valve by half at a switching therebetween.

The controller may divide the concentration of ammonia in the order of low concentration, medium concentration, and high concentration, and reduce the opening degree of the valve by half at a switching therebetween.

A receiver for storing therein ammonia may be disposed between the valve and the engine, and in a state in which the valve closes the flow path, the ammonia discharged from the engine may be stored in the receiver.

The vessel may include a flow path for guiding the liquid ammonia stored in the receiver to the fuel tank.

The present disclosure provides a vessel comprising: a fuel tank in which ammonia fuel is stored; an engine configured to receive ammonia stored in the fuel tank and combust the received ammonia; and a tank in which liquid ammonia or gaseous ammonia discharged from the engine is collected, wherein the liquid ammonia flows from the engine to the tank and then, gaseous ammonia flows from the engine to the tank.

The pressure of the tank when liquid ammonia flows from the engine to the tank may be greater than the pressure of the tank when the gas ammonia flows from the engine to the tank.

The vessel may include a first flow path through which gaseous ammonia stored in the tank is discharged from the tank, and a first valve for opening and closing the first flow path.

The first valve may be a pressure control valve.

The first valve may be controlled such that the pressure of the tank while the liquid ammonia flows from the engine to the tank is maintained to be higher than the pressure of the tank when gaseous ammonia flows from the engine to the tank.

The vessel may include a second flow path through which liquid ammonia stored in the tank is discharged from the fuel tank, and a second valve for opening and closing the second flow path.

While liquid ammonia flows from the engine to the tank, the second valve may close the second flow path.

While the gaseous ammonia flows from the engine to the tank, the second valve may close the second flow path.

The second valve may close the second flow path while gas ammonia is discharged from the tank to the outside of the tank.

The present disclosure provides a method for controlling a vessel, wherein the vessel comprises: a fuel tank for storing therein ammonia fuel; an engine for burning the ammonia stored in the fuel tank; and a tank for collecting liquid ammonia or gaseous ammonia discharged from the engine, wherein the method for controlling a vessel comprises a first step in which the engine is driven as ammonia fuel and is stopped; a second step in which liquid ammonia remaining in the engine is guided to the tank; and a third step in which gaseous ammonia remaining in the engine is collected to the tank.

The method may include, after the third step, a fourth step of discharging the gaseous ammonia to a flow path other than a flow path to the tank, and the concentration of the gaseous ammonia discharged in the fourth step may be lower than the concentration of the gaseous ammonia discharged in the third step.

The method may include, after the second step is finished and before the third step is performed,

a step of returning the liquid ammonia stored in the first tank to the fuel tank.

After the returning step is finished, the third step may be performed while lowering the pressure of the tank.

In the second step, the outlet flow path of the tank may be closed to control the pressure of the tank to increase.

In the second step, nitrogen gas may be injected into the engine to discharge liquid ammonia remaining in the engine from the engine.

The present disclosure provides a vessel comprising: a fuel tank in which ammonia fuel is stored; an engine configured to receive ammonia stored in the fuel tank and combust the received ammonia; a flow path for guiding liquid ammonia discharged from the engine to the fuel tank; a tank in which gaseous ammonia discharged from the engine is collected; and a non-condensable treatment apparatus for treating the non-condensable gas in the fuel tank.

The non-condensable treatment apparatus may include a compressor configured to compress the gas of the fuel tank, and a gas-liquid separator configured to separate the fluid compressed by the compressor into a liquid and a gas.

The liquid ammonia separated from the fluid by the gas-liquid separator may be guided to the fuel tank.

The vessel may include a buffer tank for storing therein the gas separated from the fluid by the gas-liquid separator, and the gas may include gaseous ammonia and non-condensable gas.

The gaseous ammonia and the non-condensable gas discharged from the buffer tank may be mixed with the gaseous ammonia discharged from the engine and the mixture may flow.

The vessel may include a heat exchanger provided at the outlet end of the compressor to cool the fluid discharged from the compressor.

The heat exchanger may be disposed between the compressor and the gas-liquid separator.

The vessel may include a valve provided in the flow path and controlling the flow of liquid ammonia discharged from the engine.

When the valve opens the flow path, the liquid ammonia discharged from the engine may flow to the fuel tank, whereas when the valve closes the flow path, the flow of the liquid ammonia in the engine may be blocked.

The non-condensable treatment apparatus may be always driven.

The non-condensable treatment apparatus may be driven while the engine is driven.

The non-condensable treatment apparatus may be driven while the engine driving is stopped.

The present disclosure provides a vessel comprising: a fuel tank for storing therein ammonia fuel; an engine for burning the ammonia stored in the fuel tank; a first tank for collecting liquid ammonia discharged from the engine; a second tank for collecting gaseous ammonia discharged from the engine; and a non-condensable treatment apparatus for extracting non-condensable gas from the fuel tank, wherein the liquid ammonia is collected in the first tank and then, the gaseous ammonia is collected in the second tank.

The present disclosure provides a vessel comprising: a fuel tank storing ammonia fuel; an engine configured to receive ammonia stored in the fuel tank and combust the received ammonia; a first tank in which liquid ammonia discharged from the engine is collected; a second tank in which gaseous ammonia discharged from the engine is collected; and a nitrogen separator separating nitrogen gas from the fluid discharged from the second tank.

The nitrogen separated from the fluid by the nitrogen separator may be discharged to a supply flow path through which ammonia is supplied from the fuel tank to the engine.

The vessel may include a first valve configured to open and close a flow path extending from the engine to the first tank, a second valve configured to open and close a flow path extending from the engine to the second tank, and a third valve configured to open and close a flow path extending from the second valve to the second tank.

While the gaseous ammonia of a high concentration is discharged from the engine, the first valve may close the flow path, the second valve may open the flow path, and the third valve may open the flow path.

While gas ammonia of a low concentration is discharged from the engine, the first valve may close the flow path, the second valve may open the flow path, and the third valve may close the flow path.

The nitrogen separator may be of a PSA (Pressure Swing Absorption) type.

The nitrogen separator may include an adsorbent for adsorbing ammonia, a nitrogen compressor, and a nitrogen storage tank.

The nitrogen separator may be of a TSA (Temperature Swing Absorption) type.

The nitrogen separator may include an adsorbent for adsorbing ammonia, a nitrogen compressor, a heater, and a nitrogen storage tank.

The nitrogen separator may include a separation membrane.

The nitrogen separator may include a cooler that condenses ammonia into a liquid.

The ammonia separated in the nitrogen separator may be guided to the fuel tank.

The present disclosure provides a vessel comprising: an accommodation; and a scrubber for purifying air sucked through an air intake of the accommodation, wherein the scrubber comprises an ammonia reaction unit, a cleaning water storage part, and a valve for opening and closing a flow path through which the air discharged from the scrubber flows, wherein while the air supplied to the scrubber is circulating through the ammonia reaction unit and the cleaning water storage unit, the ammonia amount therein may be lowered, wherein the scrubber is operated in a varying manner according to the concentration of ammonia contained in the air supplied from the scrubber.

The scrubber may be operated in a varying manner based on the different ammonia concentrations of the ammonia contained in the air, wherein the different ammonia concentrations include high concentration, medium concentration, and normal concentration steps.

When the ammonia concentration of the ammonia contained in the air may be the normal concentration, the scrubber circulates air in a closed loop, purifies the air, and supplies the purified air to the flow path.

When the ammonia concentration of the ammonia contained in the air may be the medium concentration, the scrubber circulates air in a closed loop, purifies the air, and supplies the purified air to the flow path, wherein new cleaning water may be supplied to the cleaning water storage unit.

When the ammonia concentration of the ammonia contained in the air may be the high concentration, the valve blocks the flow path such that the air discharged from the scrubber may be not supplied to the flow path.

The air intake may include a first air intake provided at the right side of the accommodation when being viewed in the forward movement direction of the vessel; and a second air intake provided at the left side of the accommodation when being viewed in the forward movement direction of the vessel, wherein the air suctioned in the first air intake and the second air intake are guided to the scrubber through a duct.

The vessel may include a first damper configured to block air suctioned from the first air intake; and a second damper configured to block air suctioned from the second air intake.

The degree to which each of the air intakes is opened using each of the dampers may be reduced when the ammonia concentration in the air sucked in from each of the air intakes is high.

The vessel may include a fan configured to adjust an air volume of air suctioned through each of the first air intake and the second air intake.

A flow rate of the air suctioned under the operation of the fan may be reduced when an ammonia concentration in the air suctioned through one of the first air intake and the second air intake is high.

The vessel of the present disclosure comprises: a fuel tank for storing therein ammonia fuel; an engine configured to receive ammonia stored in the fuel tank and combust the received ammonia; a partitioned work space where ammonia gas may be likely to leak; a door allowing or disallowing access to the work space; a locker that locks the door so that it does not open; an alarm button for checking entry or non-entry of the operator when the operator enters the work space through the door; a gas detector provided in the work space and sensing an ammonia gas concentration therein; and a fan configured to ventilate the air of the work space with external air, wherein the locker locks the door when an ammonia concentration in the work space is equal to or greater than a predetermined value and an operator is not in the work space.

When the ammonia concentration in the work space is equal to or greater than a predetermined value, in a situation where an operator is present in the work space, the fan may be driven faster than in a situation where the operator is not in the work space.

When the ammonia concentration in the work space is reduced to a predetermined value or lower, the locker releases the door lock.

The entrance door includes a first entrance door and a second entrance door, wherein the alarm button includes: a first alarm button provided at the first door; a second alarm button provided at the second door, wherein the first alarm button and the second alarm button interwork with each other so that an operator checks an entry using one of the first alarm button and the second alarm button, and checks an exit using one of the first alarm button and the second alarm button.

The vessel may include a vent mast; and an accommodation; wherein a distance between the accommodation and the propeller may be greater than the distance and the propeller and the vent mast,

Along the forward movement direction of the vessel, the accommodation may be disposed at a front side, and the vent mast may be disposed at a rear side.

The present disclosure provides a vessel comprising an accommodation; and an engine room which is disposed under the accommodation and in which an engine is disposed;

an engine control room which is disposed under the accommodation and in which a device for controlling the engine is disposed; and a passage which connects the engine control room to the accommodation, wherein the engine room and the engine control room are isolated from each other.

A staircase connecting the accommodation at the higher level and the engine control room at the lower level to each other may be disposed in the passage.

The engine control room may be isolated from the engine room by a partition wall so that the operator may not move from the engine room to the engine control room.

### [Advantageous Effects]

According to the present disclosure, ammonia remaining in the engine when the use of ammonia fuel is stopped can be reused as fuel, thereby improving fuel efficiency.

In addition, the amount of ammonia remaining in the engine to be released to the outside may be reduced, thereby reducing risk factors.

In addition, according to the present disclosure, the ambient ammonia concentration may be controlled by adjusting the amount of discharged ammonia in consideration of the external situation.

According to the present disclosure, liquid ammonia may be stored in a single tank, and then gaseous ammonia may be stored therein, thereby simplifying the overall configuration.

According to the present disclosure, the non-condensable gas present in the fuel tank can be removed from the fuel tank, thereby maintaining the ammonia concentration of the fuel to be supplied to the engine at an appropriate level and preventing the internal pressure of the fuel tank from excessively increasing.

According to the present disclosure, the safety of the space where an operator lives or works may be secured when the ammonia leaks.

According to the present disclosure, the engine room and the engine control room may be isolated from each other to ensure the safety of the operator.

### [Brief Description of the Drawings]

FIG. 1A is a diagram illustrating a concept of a first purging step of a first embodiment of the present disclosure.
FIG. 1B is a diagram illustrating a concept of a second purging step of a first embodiment of the present disclosure.
FIG. 1C is a diagram illustrating a concept of a third purging step of a first embodiment of the present disclosure.
FIG. 1D is a diagram illustrating a concept of a heat exchanger according to a first embodiment of the present disclosure.
FIG. 2 is a diagram illustrating a control flow of the first embodiment.
FIG. 3A is a diagram illustrating a wind speed and ammonia emission in the first embodiment.
FIG. 3B is a table illustrating a wind speed and ammonia emission in the first embodiment.
FIG. 4 is a diagram illustrating a process of changing a fuel supply mode in an engine.
FIG. 5 is a diagram illustrating the concept of a second embodiment of the present disclosure.
FIG. 6 is a diagram illustrating a control flow of the second embodiment.
FIG. 7 is a diagram illustrating the concept of a third embodiment of the present disclosure.
FIG. 8 is a diagram illustrating a modified concept of the third embodiment.
FIG. 9 is a diagram illustrating the concept of the fourth embodiment.
FIG. 10 is a diagram illustrating a first application example of a nitrogen separator of the fourth embodiment.
FIG. 11 is a diagram illustrating a second application example of the nitrogen separator of the fourth embodiment.
FIG. 12 is a diagram illustrating a third application example of the nitrogen separator of the fourth embodiment.
FIG. 13 is a diagram illustrating a fourth application example of the nitrogen separator of the fourth embodiment.
FIG. 14 is a diagram illustrating a technical concept commonly applicable to the above-described embodiments.
FIG. 15A is a diagram specifically illustrating the first step Step1 of FIG. 14.
FIG. 15B is a diagram specifically illustrating the second step Step2 of FIG. 14.

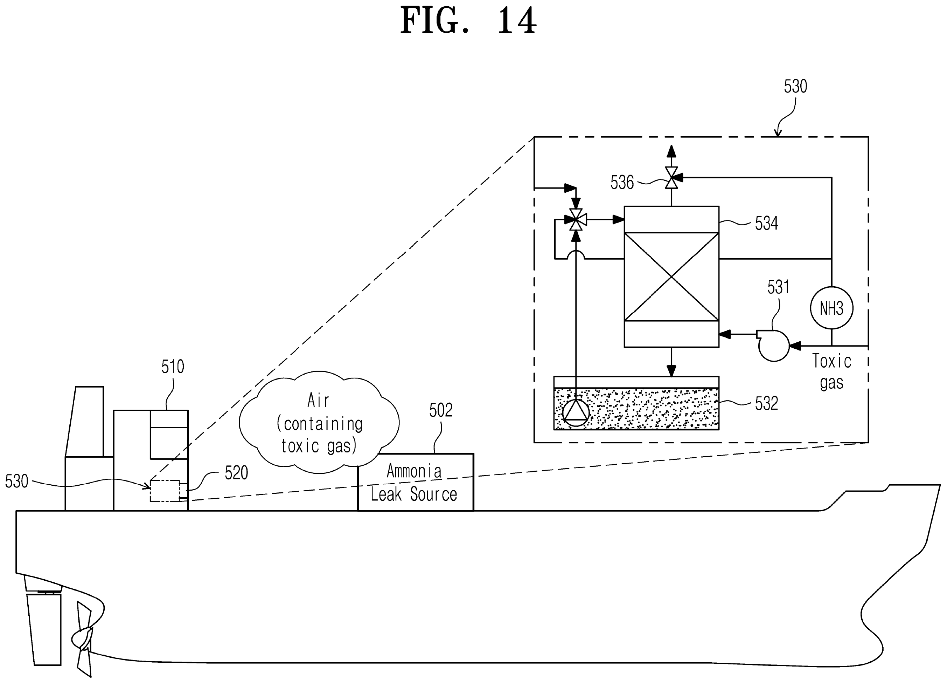

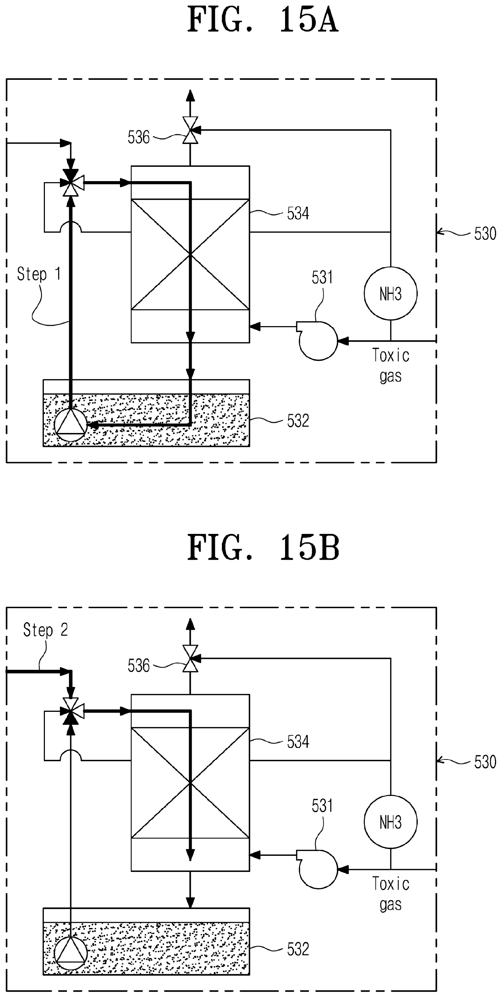

FIG. 15A is c diagram specifically illustrating the third step Step3 of FIG. 14.

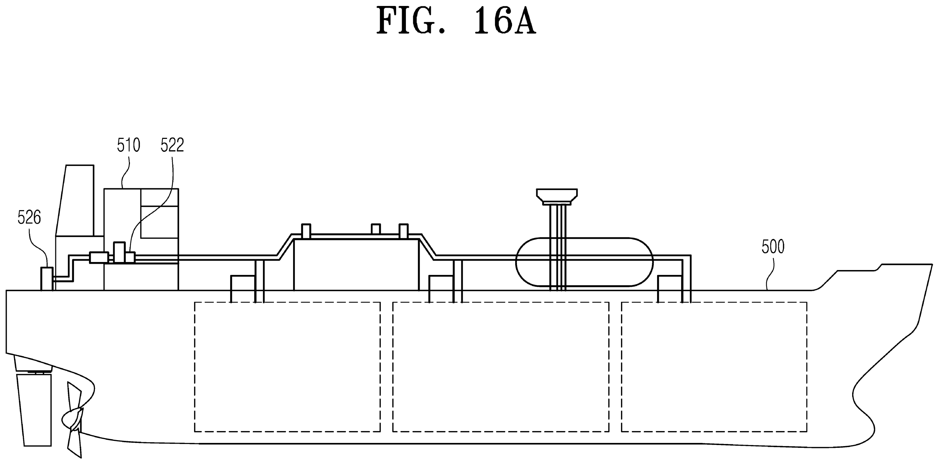

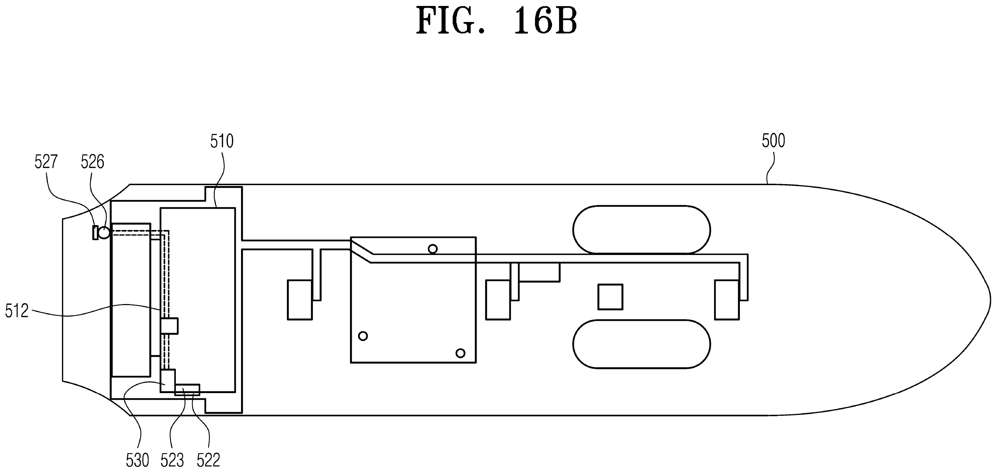

FIG. 16 is a diagram illustrating another technical concept commonly applicable to the above-described embodiments.

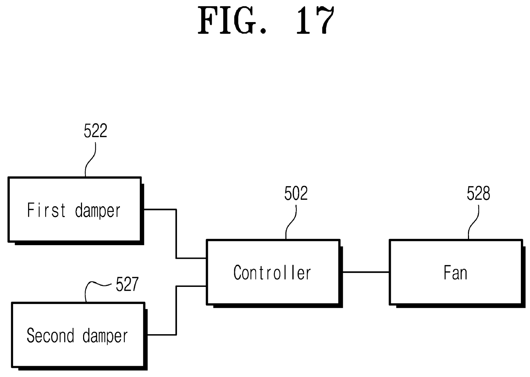

FIGS. 17 to 19 are diagrams specifically illustrating the technical concept of FIG. 16.

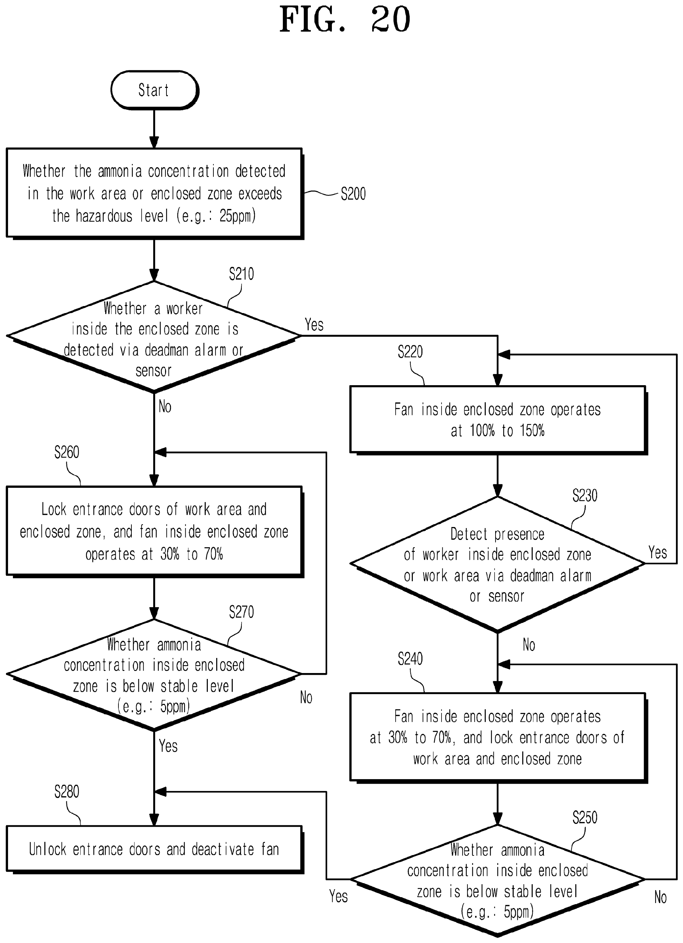

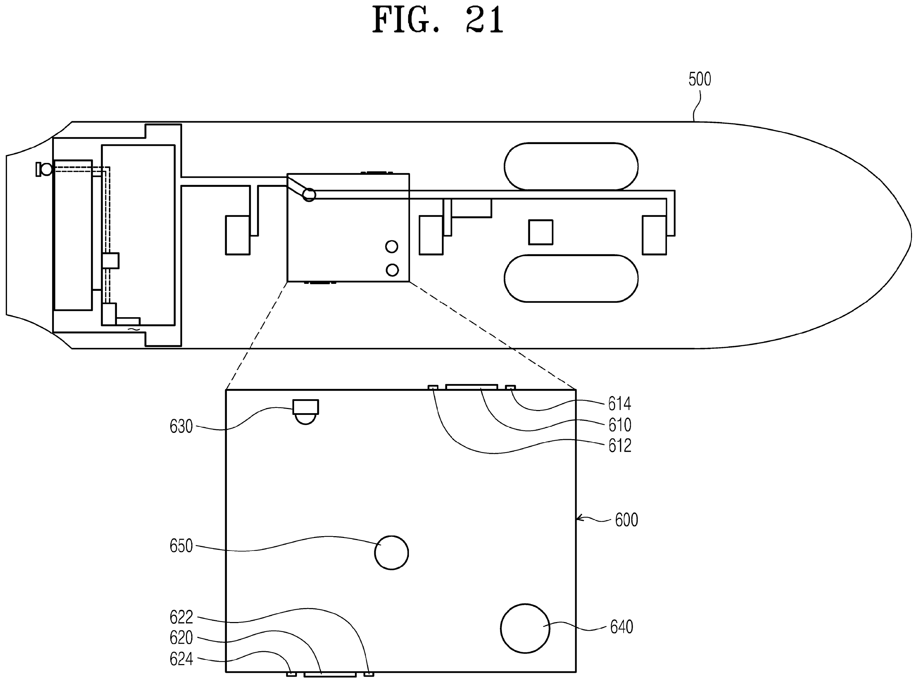

FIGS. 20 to 21 are diagrams for illustrating another technical concept commonly applicable to the above-described embodiments.

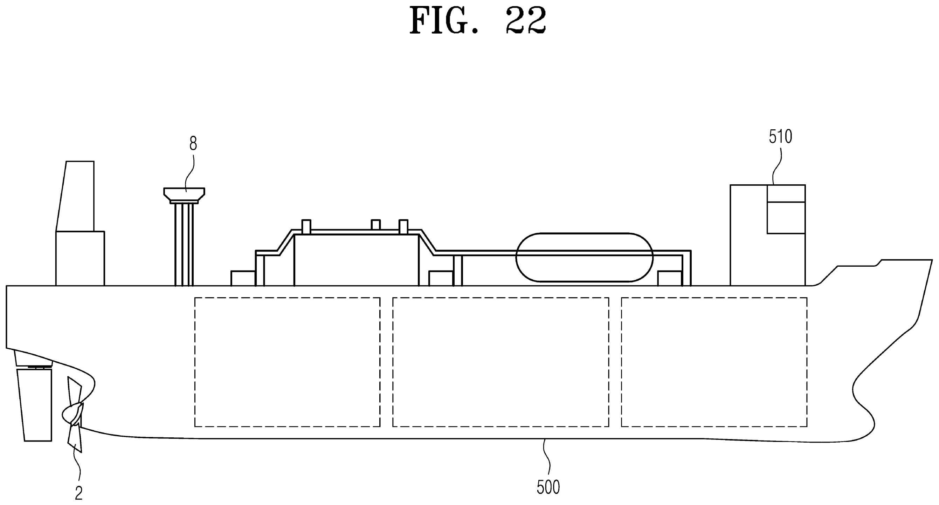

FIG. 22 is a diagram illustrating still another technical concept commonly applicable to the above-described embodiments.

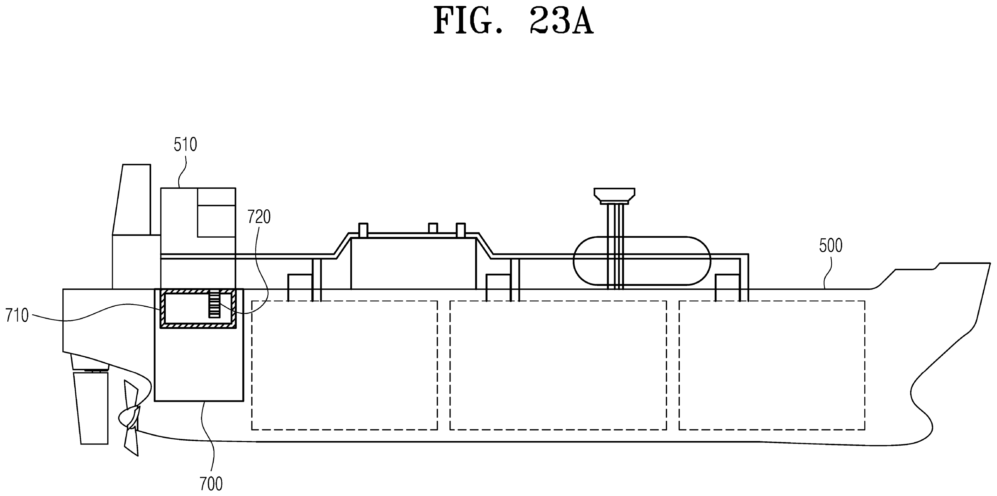

FIG. 23A is a side view of a vessel with respect to still yet another technical concept commonly applicable to the above-described embodiments.

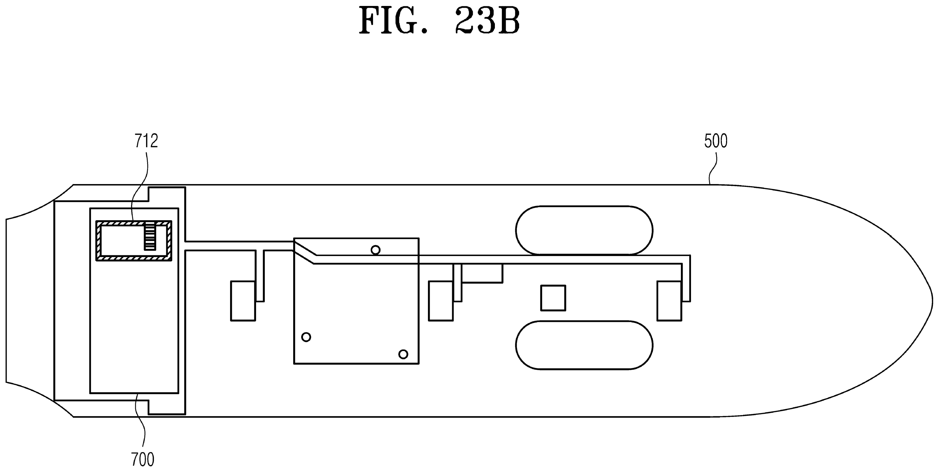

FIG. 23B is a top view of a vessel with respect to still yet another technical concept commonly applicable to the above-described embodiment.

### [Best Mode]

Hereinafter, preferred embodiments of the present disclosure capable of realizing the above purpose will be described with reference to the accompanying drawings.

In this process, the sizes or shapes of the components illustrated in the drawings may be exaggerated for clarity and convenience of illustration. In addition, terms specifically defined in consideration of the configuration and operation of the present disclosure may vary according to the intention or practice of a user or an operator. Definitions of these terms should be made based on the contents throughout the present specifications.

Hereinafter, a vessel is an expression that encompasses not only an ammonia carrier that transports ammonia as a cargo, but also a container ship, a merchant ship, or a vessel capable of producing natural gas in the ocean, and a marine structure including a gas platform and marine floats.

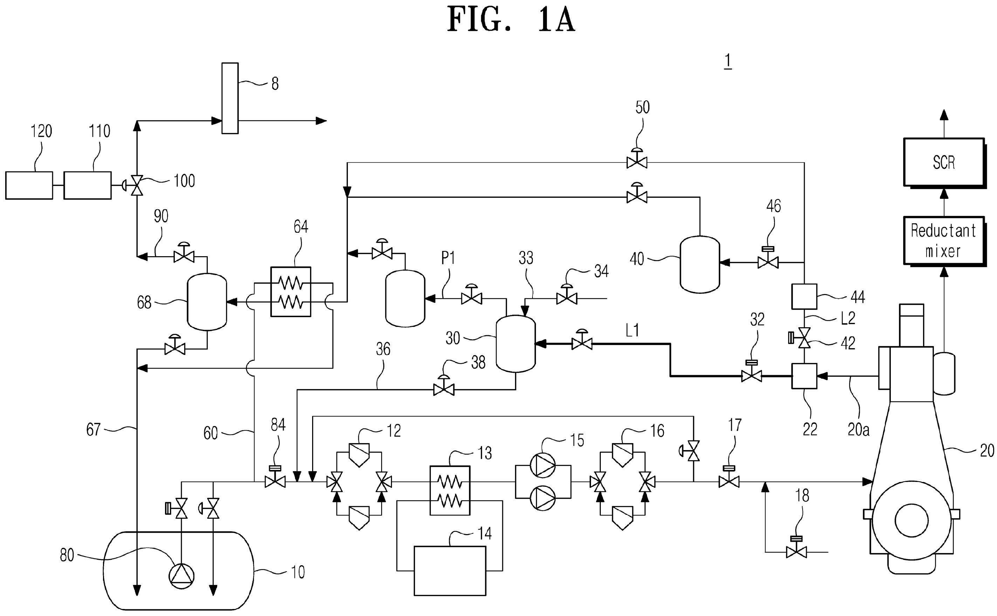

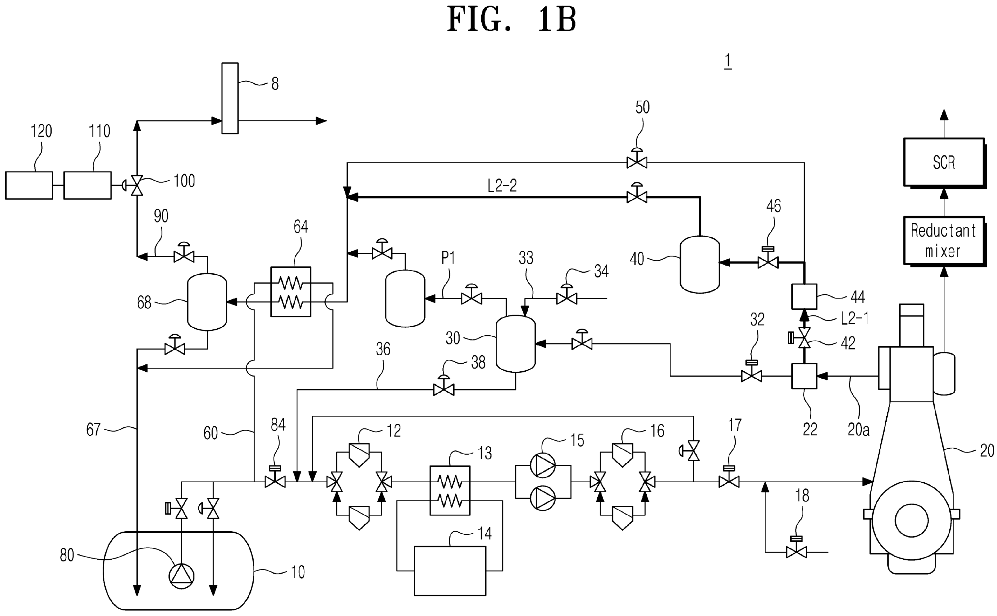

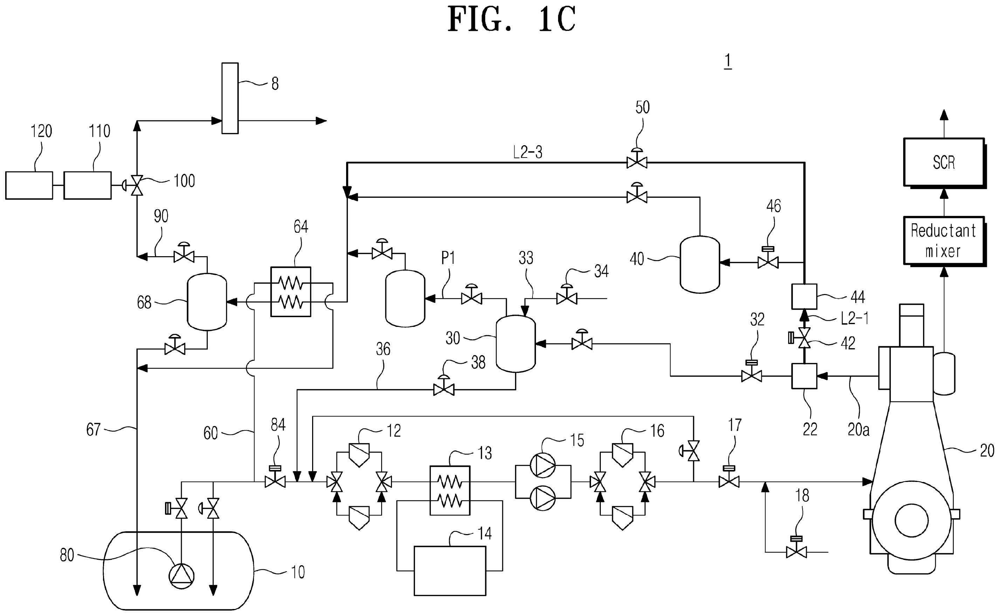

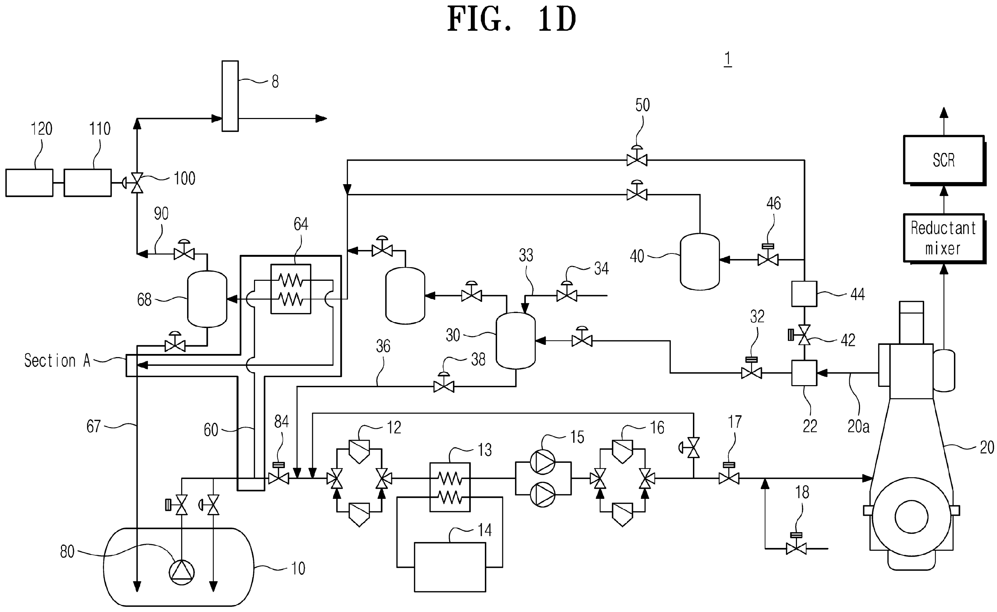

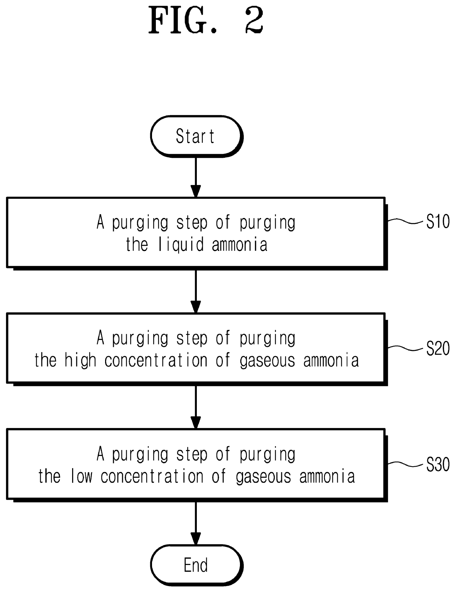

FIG. 1A is a diagram illustrating a concept of a first purging step according to a first embodiment of the present disclosure. FIG. 1B is a diagram illustrating a concept of a second purging step according to a first embodiment of the present disclosure. FIG. 1C is a diagram illustrating a concept of a third purging step according to a first embodiment of the present disclosure. FIG. 1D is a diagram illustrating a concept of a heat exchanger according to a first embodiment of the present disclosure. FIG. 2 is a diagram illustrating a control flow of the first embodiment.

Referring to FIGS. 1A, 1B, 1C, and 2, the vessel according to the first embodiment includes a fuel tank 10 in which ammonia fuel is stored, an engine 20 to and in which ammonia stored in the fuel tank 10 is supplied and burned, a first tank 30 in which liquid ammonia discharged from the engine 20 is collected, and a second tank 40 in which gaseous ammonia discharged from the engine 20 is collected. An example in which the tank for storing ammonia therein which will be described later is the fuel tank 10 will be described. However, the present disclosure is not limited thereto. For example, the fuel tank 10 may be replaced with a cargo tank that stores ammonia cargo therein.

Ammonia is stored in the fuel tank 10, and when ammonia is used as fuel in the engine 20, ammonia flows from the fuel tank 10 to the engine 20. In this regard, a low pressure pump 80 and a high pressure pump 15 are provided to pressurize the ammonia stored in the fuel tank 10, so that the ammonia may be guided to the engine 20. The high pressure pump 15 may be a fuel supply pump.

A flow path along which the ammonia pressurized by the low pressure pump 80 and the high pressure pump 15 flows to the engine 20 may be opened or closed by a fuel supply valve 17. When the fuel supply valve 17 closes the flow path, ammonia cannot flow from the fuel tank 10 to the engine 20. When the fuel supply valve 17 opens the flow path, ammonia flows from the fuel tank 10 to the engine 20.

While the engine 20 is driven using a fuel other than ammonia, the fuel supply valve 17 closes the flow path so that the ammonia in the fuel tank 10 does not flow to the engine 20. On the other hand, while the engine 20 uses ammonia as fuel, the fuel supply valve 17 opens the flow path so that the ammonia stored in the fuel tank 10 flows to the engine 20.

When the engine 20 combusts the fuel other than ammonia and then changes the fuel to ammonia, the engine 20 uses ammonia as fuel, and the ammonia pressurized by the low pressure pump 80 and the high pressure pump 15 flows along the flow path connected to the engine 20.

The ammonia discharged from the fuel tank 10 may flow through a low pressure filter 12 and then be heated by a fuel heater 13. In this regard, the fuel heater 13 may receive heat from a separate heat providing unit 14, and the ammonia may be heated while the fuel heater 13 exchanges the heat with ammonia. The heat providing unit 14 may circulate the heat medium to the fuel heater 13 to heat the fuel heater 13.

After having flowed through the high pressure pump 15, the ammonia reaches the engine 20 via a high pressure filter 16.

The engine 20 may be operated by using different fuels such as ammonia and diesel.

When ammonia is used as fuel in the engine 20 and then, the other fuel than ammonia such as diesel is used, the ammonia remaining in the engine 20 may be removed to use the other fuel than ammonia such as diesel. For example, the remaining ammonia may be discharged from the engine 20 along a discharge pipe 20a connected to the engine 20.

The process of reflowing ammonia from the engine 20 may be referred to as a purging process, and the step of reflowing ammonia from the engine 20 may be referred to as a purging step.

The purging step may include a first purging step of purging liquid ammonia, a second purging step of purging a high concentration of gaseous ammonia, and a third purging step of purging a low concentration of gaseous ammonia. For example, when the concentration of gaseous ammonia exceeds 5ppm, the gaseous ammonia may be referred to as a high concentration of gaseous ammonia, and when the concentration of gaseous ammonia is lower than 5ppm, the gaseous ammonia may be referred to as a low concentration of gaseous ammonia. However, 5ppm acting as a reference for defining the high concentration and low concentration, is only an example and is not limited thereto. For example, a high concentration of gaseous ammonia and a low concentration of gaseous ammonia may be defined based on 10ppm.

When ammonia is used as fuel in the engine 20 and then the other fuel than ammonia such as diesel is used in the engine 20 again, the fuel supply valve 17 blocks the flow path. Accordingly, the flow of ammonia from the fuel tank 10 to the engine 20 is blocked.

The valve 18 may open the flow path such that nitrogen is supplied to the flow path through which ammonia flows to the engine 20. Nitrogen is a kind of non-condensable gas that allows ammonia stagnant in the engine 20 to be discharged from the engine 20 along a discharge pipe 20a.

The valve 18 opens the flow path so that nitrogen is introduced into the engine 20, and thus ammonia remaining in the engine 20 flows under pressure (S10 of FIG. 2). Before the engine 20 uses fuel such as diesel, a process of reflowing ammonia remaining in the engine 20 is required.

A first valve 32 and a second valve 42 are disposed in a flow path through which ammonia is discharged from the engine 20.

The first valve 32 opens and closes a flow path extending from the engine 20 to the first tank 30, and the second valve 42 opens and closes a flow path extending from the engine 20 to the second tank 40. The first tank 30 may be referred to as a catch tank, and the second tank 40 may be referred to as a purge tank.

The liquid ammonia remaining in the engine 20 may be removed through a first purging step. The liquid ammonia remaining in the engine 20 may flow to the first tank 30 along a first flow path (L1 of FIG. 1A).

When the liquid ammonia remaining in the engine 20 flows to the first tank 30, the first valve 32 opens the first flow path L1, and the second valve 42 closes a 2-1 flow path L2-1.

A sensor 22 is disposed in a flow path through which ammonia is discharged from the engine 20, so that the sensor 22 may determine whether the fluid discharged from the engine 20 is a liquid or a gas. For example, the sensor 22 may include a dry/wet sensor.

When the sensor 22 determines that the fluid is the liquid, the first valve 32 may open the first flow path L1, and the second valve 42 may close the 2-1 flow path L2-1. In this regard, a nitrogen supply flow path 33 may be opened by a valve 34 that opens or closes the nitrogen supply flow path 33 for supplying nitrogen to the first tank 30. Accordingly, the first tank 30 may maintain an internal pressure of a predetermined value, for example, 25bar, so that liquid ammonia discharged from the engine 20 may be guided to the first tank 30 while maintaining a liquid state.

The liquid ammonia stored in the first tank 30 may flow to the fuel supply system through a return flow path 36 and may be used again as fuel. For example, the stored liquid ammonia may flow to the high pressure pump 15 between the fuel tank 10 and the engine 20 through the return flow path 36, and may be re-supplied to the engine 20 to be used again as fuel therein.

Even though the liquid ammonia flows to the first tank 30, gaseous ammonia may be contained in the first tank 30 for various reasons. The gaseous ammonia stored in the first tank 30 may be discharged to the outside out of the first tank 30 through a separate flow path P1. The gaseous ammonia discharged from the first tank 30 may be circulated to the fuel tank 10 or discharged to the outside through a vent mast 8.

When the first purging step of purging the liquid ammonia has been completed, the high concentration of gaseous ammonia remaining in the engine 20 may be removed through the second purging step. The high concentration of gaseous ammonia remaining in the engine 20 may flow to the second tank 40 along the 2-1 flow path (L2-1 in FIG. 2A) and the 2-2 flow path (L2-2). When the sensor 22 determines that gaseous ammonia other than liquid ammonia is discharged from the engine 20, a step of purging the high concentration of the gaseous ammonia is performed in S20. In this case, the first valve 32 closes the first flow path L1 so that the gaseous ammonia does not flow to the first tank 30. The second valve 42 opens the 2-1 flow path L2-1.

Further, a third valve 46 is provided in the 2-2 flow path L2-2 through which the gaseous ammonia flows as obtained by dividing the flow path through which the gaseous ammonia flows into two sections. When the 2-2 flow path L2-2 is opened by the third valve 46, the high-concentration gaseous ammonia discharged from the engine 20 may flow through the second valve 42 and the third valve 46 and along the 2-1 flow path L2-1 and the 2-2 flow path L2-2 and then be stored in the second tank 40. While the high concentration of gaseous ammonia is discharged from the engine 20, the second valve 42 opens the 2-1 flow path L2-1, and the third valve 46 opens the 2-2 flow path L2-2.

The high concentration of gaseous ammonia has toxicity. Thus, after the high concentration of gaseous ammonia has been stored in the second tank 40, the high concentration of gaseous ammonia may be adjusted and discharged in an appropriate amount. The appropriate amount may be arbitrarily adjusted by the user according to laws and regulations.

In this regard, a concentration sensor 44 for measuring the concentration of ammonia is provided at a rear end of the second valve 42. The concentration sensor 44 may determine whether the discharged gaseous ammonia has the concentration higher than a predetermined value or has a concentration lower than the predetermined value. The predetermined value may be changed by the operator. Thus, a reference value defining the high concentration and low concentration may vary depending on the work environment. For example, the high concentration and the low concentration may be distinguished from each other based on 5ppm. As another example, a high concentration and a low concentration may be defined based on 10ppm.

In this regard, the high concentration means the concentration of ammonia higher than the low concentration.

Since gaseous ammonia is stored in the second tank 40, the pressure of the first tank 30 in which liquid ammonia is stored is maintained higher than the pressure of the second tank 40. This is because when the pressure is high, ammonia is in a liquid state, whereas when the pressure is low, ammonia is changed into gas. For example, the second tank 40 may be maintained at a pressure of 5bar, which is lower than that of the first tank 30. 5bar is only an example, and the pressure is not limited thereto. The pressure maintained in the second tank 40 may be higher or lower than 5bar.

The gaseous ammonia collected in the second tank 40 may flow to the heat exchanger 64 along the 2-2 flow path L2-2, be cooled therein, be converted into liquid ammonia therein, and flow therefrom to the fuel tank 10. The residual gas ammonia that is not cooled even using the heat exchanger 64 (e.g., a cooling device) but is maintained in a gaseous ammonia state may be stored in a receiver 68 and then discharged to the vent mast 8.

The heat exchanger 64 is only an example of an ammonia treatment apparatus. The present disclosure is not limited thereto. For example, the heat exchanger 64 may be a liquefaction apparatus for reducing the concentration of ammonia to solve the toxicity problem of ammonia. In order to solve the toxicity problem of ammonia, the ammonia treatment apparatus may be an apparatus for lowering the concentration of ammonia, which may include the heat exchanger 64, an absorption tank, a scrubber, and an integrated scrubber in which the absorption tank and the scrubber are coupled to each other.

For example, ammonia introduced from at least one of the first tank 30, the second tank 40, and a 2-3 flow path L2-3 may be treated in the scrubber. Ammonia treated in the scrubber may be discharged to the fuel tank 10 or the vent mast 8. In another example, ammonia treated in the scrubber may be stored in the receiver 68 and then discharged to the ocean.

When the second purging step of purging the high concentration of gaseous ammonia has been completed, the low concentration of gaseous ammonia remaining in the engine 20 may be removed through a third purging step. The low concentration of gaseous ammonia remaining in the engine 20 may flow along the 2-1 flow path L2-1 and the 2-3 flow path L2-2.

When the concentration of gaseous ammonia measured by the concentration sensor 44 is lower than or equal to a predetermined value, it may be determined that a low concentration of gaseous ammonia has been discharged. When it is determined that gas ammonia of the low concentration has been discharged, the second valve 42 and a fourth valve 50 open the 2-1 flow path L2-1 and the 2-3 flow path L2-3, respectively, and the third valve 46 closes the 2-2 flow path L2-2 (S30 of FIG. 2). This process is referred to as the third purging step in which the low concentration ammonia is purged.

Since the third valve 46 blocks the 2-2 flow path L2-2, gas ammonia of a low concentration may not be guided to the second tank 40, but may be guided to another 2-3 flow path L2-3. Since the third valve 46 closes the 2-2 flow path L2-2, the low-concentration gaseous ammonia is guided to the 2-3 flow path L2-3 in which the fourth valve 50 is disposed. In this regard, the 2-3 flow path L2-3 is opened in the fourth valve 50, so that the low-concentration gaseous ammonia is guided through a flow path other than a flow path to the first tank 30 and the second tank 40. As described above, after the liquid ammonia has been collected in the first tank 30, in response to that it is determined using the sensor 22 that the liquid ammonia does not remain or a very small amount thereof remains, a process in which the gas ammonia is collected in the second tank 40 is executed.

In the first embodiment, in a situation in which the fuel other than the ammonia is to be used while the engine is operating with ammonia as a fuel, the ammonia remaining in the engine 20 may be discharged from the engine by performing the ammonia liquid purging step, the high concentration ammonia gas purging step after the ammonia liquid purging, and the low concentration ammonia gas purging step after the high concentration ammonia gas purging in this order.

While the fuel is supplied from the fuel tank 10 to the engine 20, the first valve 32 and the second valve 42 respectively close the corresponding flow paths. In one example, when the ammonia is not discharged from the engine 20, even though the flow paths are respectively opened using the first valve 32 and the second valve 42, the ammonia does not flow to the corresponding tanks and flow paths. Thus, the corresponding flow paths may be opened using the first valve 32 and the second valve 42.

While the ammonia is discharged from the engine 20, the second valve 42 may close the 2-1 flow path L2-1, and after a predetermined time has elapsed, the second valve 42 may open the 2-1 flow path L2-1. When the second valve 42 opens the 2-1 flow path L2-1, the flow path through which the gaseous ammonia may be treated is opened, whereas when the second valve 42 closes the 2-1 flow path L2-1, the flow path through which the gaseous ammonia may be treated is closed.

In the first embodiment, since the liquid ammonia from the engine 20 is treated and then the gaseous ammonia is treated, the second valve 42 may be operated in the above-described manner.

While the gaseous ammonia is discharged from the engine 20, the third valve 46 opens the 2-2 flow path L2-2, and after a predetermined time has elapsed, the third valve 46 closes the 2-2 flow path L2-2. In the process of discharging gaseous ammonia, a relatively high concentration of ammonia gas is initially discharged, but the concentration of the ammonia gas decreases over time.

In a state in which the flow path is opened using the valve 18, as nitrogen is introduced, the ammonia concentration decreases as the nitrogen concentration increases. For example, the valve 18 may be opened in the first purging and the second purging steps. Since the valve 18 is in an open state, the nitrogen is injected into the engine 20, such that ammonia in the engine 20 decreases, and the nitrogen therein increases, such that the ammonia concentration may decrease.

In order to maintain the pressure of the first tank 30, the vessel 1 includes a nitrogen supply flow path 33 for supplying nitrogen to the first tank 30. The injected amount of nitrogen may be adjusted using the valve 34 such that an environment in which while the liquid ammonia in the first tank 30 maintains the liquid state, the liquid ammonia can flow to the first tank 30 may be created.

A return flow path 36 for guiding the ammonia collected in the first tank 30 to a fuel supply system is provided, and a valve 38 for opening and closing the flow path through which the liquid ammonia flows is provided in the return flow path 36. When the valve 38 opens the return flow path 36, the liquid ammonia stored in the first tank 30 may be returned to the flow path through which the ammonia flows from the fuel tank 10 to the engine 20. The returned ammonia liquid may be used to drive the engine 20.

When the low pressure pump 80 pressurizes the ammonia of the fuel tank 10 in a state in which the valve 84 blocks the flow path, the ammonia is not supplied to the engine 20. In addition, even in a state in which the valve 84 opens the flow path, the ammonia pressurized by the low-pressure pump 80 may flow to another flow path.

The vessel of the present embodiment includes the fuel tank 10 in which ammonia fuel is stored, the low pressure pump 80 that provides pressure for flowing the ammonia in the fuel tank 10, the engine 20 receiving the ammonia stored in the fuel tank 10 and combusting the same, a bypass flow path 60 along which the ammonia in the fuel tank 10 flows, and the heat exchanger 64 provided in the bypass flow path 60 and configured to perform the heat exchange with the ammonia discharged from the engine 20. Using the bypass flow path 60, the ammonia of the fuel tank is guided to bypass the engine 20, and thus flows to a place other than the engine.

That is, in the present embodiment, the ammonia in the fuel tank 10 selectively flows to the engine 20 or the heat exchanger 64 under the pressure provided from the low pressure pump 80.

Referring to FIG. 1D, the purged gaseous ammonia may be cooled via the heat exchange with the liquid ammonia in the fuel tank 10. The flow path through which the purged gaseous ammonia flows and the bypass flow path 60 through which the liquid ammonia of the fuel tank 10 flows may be physically independent of each other.

When ammonia is supplied from the fuel tank 10 to the engine 20, the valve 84 opens a flow path between the fuel tank 10 and the engine 20. On the other hand, when ammonia is supplied to the heat exchanger 64, the valve 84 may close the flow path extending from the fuel tank 10 to the engine 20.

In one example, even though the valve 84 opens the flow path between the fuel tank 10 and the engine 20, a portion of the ammonia may flow to the bypass flow path 60 toward the heat exchanger 64 in a state in which the portion is pressurized by the pump 80.

The ammonia discharged from the engine 20 and the ammonia guided from the fuel tank 10 to the heat exchanger 64 may not be mixed with each other but may flow to the heat exchanger 64 in an independent manner, and may exchange heat with the heat exchanger in an independent manner. That is, each of the ammonia discharged from the engine 20 and the ammonia discharged from the fuel tank 10 may exchange the heat with the heat exchanger while flowing through the heat exchanger 64 while independently flowing in corresponding flow paths thereof.

When the fuel tank 10 is a cargo tank, the fuel tank maintains a low temperature, so that the ammonia discharged from the engine 20 is cooled. Thus, when the gaseous ammonia is present, a portion of the gas ammonia may be phase-changed to the liquid ammonia.

The gaseous ammonia discharged from the engine 20 is in a gaseous state, and thus the temperature of the gaseous ammonia discharged from the engine 20 may be relatively higher than that of the ammonia stored in the fuel tank 10. On the other hand, the ammonia discharged from the fuel tank 10 may be liquid ammonia, and thus the temperature thereof may be relatively lower than that of the gaseous ammonia discharged from the engine 20. Accordingly, while flowing through the heat exchanger 64, the gaseous ammonia discharged from the engine 20 may heat-exchange with the ammonia in the fuel tank 10, so that a portion of the gaseous ammonia may be phase-changed into liquid ammonia.

According to the present embodiment, the ammonia gas discharged from the engine may be cooled using the ammonia stored in the fuel tank 10, such that there is no need to provide a separate re-liquefaction system, and the load of the entire system may be reduced.

The embodiment in which low-temperature liquid ammonia stored in the fuel tank 10 is used as the refrigerant is only an example. However, the present disclosure is not limited thereto. The purged ammonia gas may be cooled through a refrigerant system connected to a cargo tank (not shown).

The ammonia liquid guided from the fuel tank 10 to the heat exchanger 64 along the bypass flow path 60 may be returned to the fuel tank 10, and may be subsequently supplied to the engine 20 to be used as fuel.

The receiver 68 may be included which stores therein the purged ammonia directed from the engine 20 to the heat exchanger 64. Thus, after the purged ammonia is cooled down, the purged ammonia may be temporarily stored in the receiver. The purged ammonia having flowed through the heat exchanger 64 may include gas ammonia and liquid ammonia. Accordingly, the gaseous ammonia and liquid ammonia may be present together in the receiver 68.

The liquid ammonia stored in the receiver 68 may be returned to the fuel tank 10, and the gaseous ammonia stored in the receiver 68 may be discharged through the vent mast 8.

For example, the liquid ammonia stored in the receiver 68 may be discharged to the ocean.

In the present embodiment, a technique for converting gaseous ammonia into liquid ammonia via a process of liquefying gaseous ammonia discharged from the engine 20 and reusing the converted liquid ammonia as fuel is presented.

The vessel of the present embodiment includes the first tank 30 in which liquid ammonia discharged from the engine is collected, and the gaseous ammonia collected in the first tank 30 is guided to the heat exchanger 64.

In addition, the vessel of The vessel of the present embodiment includes the second tank 40 in which high-concentration gaseous ammonia discharged from the engine 20 is collected, and the high-concentration gaseous ammonia collected in the second tank 40 is guided to the heat exchanger 64.

In addition, the low concentration of gaseous ammonia discharged from the engine 20 is guided to the heat exchanger 64 without flowing through a tank for storage.

In the present embodiment, the ammonia in the gas phase into which the liquid ammonia discharged from the engine is converted, the high-concentration gaseous ammonia, and low-concentration gaseous ammonia are guided to the heat exchanger 64 and are cooled in the heat exchanger 64 to be changed into the liquid ammonia. The changed liquid ammonia is returned to the fuel tank 10 and used as fuel, such that the fuel efficiency may be improved.

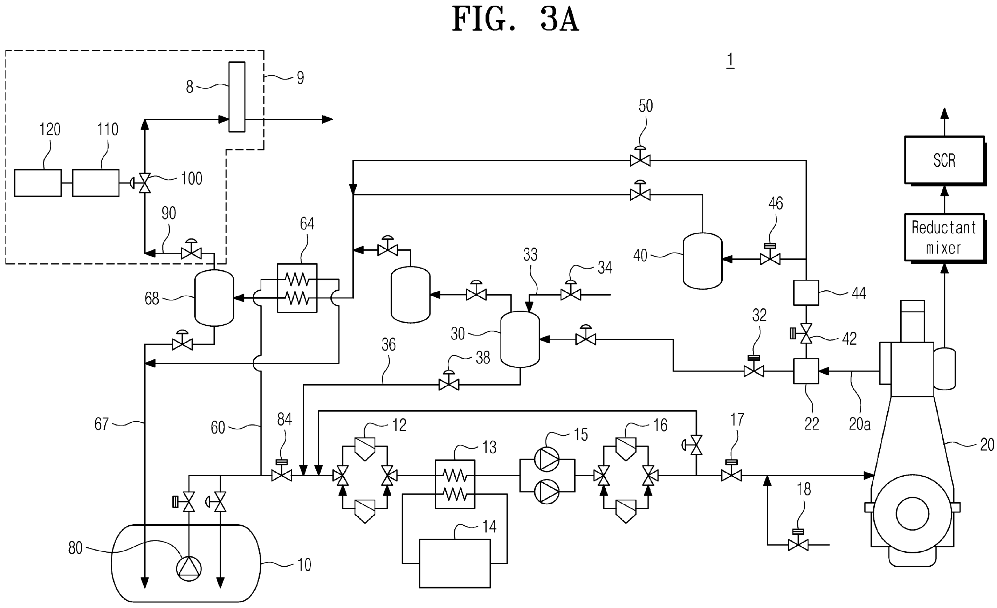

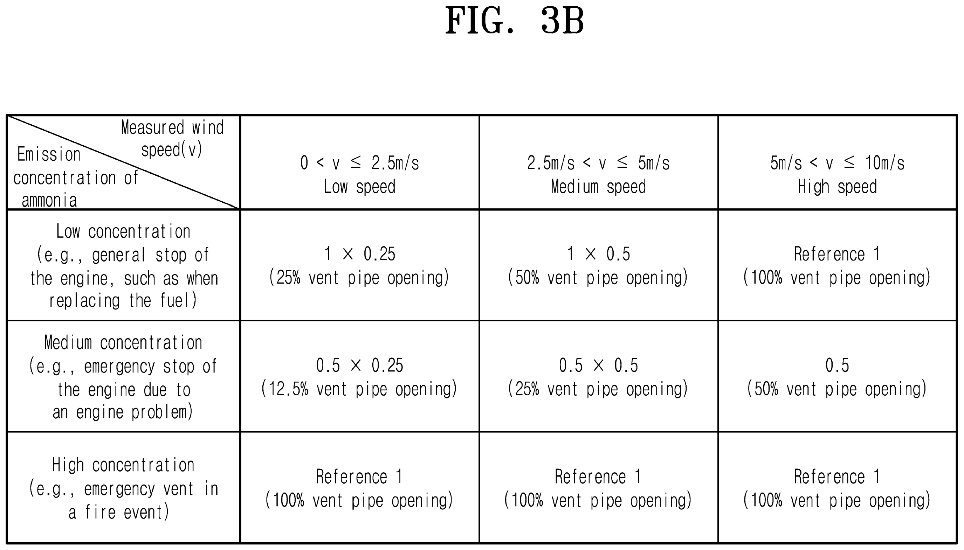

FIG. 3A is a diagram illustrating a wind speed and ammonia emission in the first embodiment, and FIG. 3B is a table illustrating a wind speed and ammonia emission in the first embodiment.

Referring to FIG. 3A, the vessel of the present embodiment may include the fuel tank 10 in which the ammonia fuel is stored, the engine 20 receiving the ammonia stored in the fuel tank 10 and configured to combust the same, and an exhaust unit 9 for discharging the gaseous ammonia discharged from the engine 20 to the outside.

Referring to FIG. 3A, the exhaust unit 9 includes an exhaust flow path 90 through which ammonia discharged from the engine 20 is exhausted to the outside, a valve 100 for adjusting the degree of opening of the exhaust flow path 90, a controller 110 for controlling the valve 100, and the vent mast 8 through which the ammonia having flowed through the valve 100 is discharged to the outside.

When the engine 20 drives the engine using ammonia and attempts to drive the engine using the fuel other than ammonia, the ammonia remaining in the engine 20 should be discharged from the engine. In this regard, the ammonia remaining in the engine 20 flows through a flow path in which the first tank 30 is disposed, a flow path in which the second tank 40 is disposed, or a flow path that does not pass through the two tanks. After having flowed through the three flow paths, the ammonia heat-exchanges with the heat exchanger 64 and then is stored in the receiver 68.

The gas ammonia and the liquid ammonia coexist in the receiver 68. The gas ammonia is guided to the exhaust passage 90, and the liquid ammonia flows to the fuel tank 10 through a separate flow path.

The controller 110 may adjust the amount of discharged ammonia in consideration of the speed and direction of the wind blowing from the outside out of the vessel 1. For example, the ammonia may be significantly diluted as the speed of the wind blowing from the outside increases. In this case, the controller 110 may increase the amount of discharged ammonia. For example, the ammonia may be slightly diluted as the speed of the wind blowing from the outside decreases. In this case, the controller 110 may reduce the amount of discharged ammonia.

The controller 110 controls the degree of opening of the valve 100 such that a large amount of ammonia is discharged through the exhaust flow path 90.

When the table of FIG. 3B is interpreted in a column direction, as shown in FIG. 3A, the controller 110 may divide the emission concentration of ammonia discharged through the exhaust flow path 90 into the low concentration, medium concentration, and high concentration. As the discharged ammonia concentration increases from the low concentration to the medium concentration, the degree of opening of the valve 100 can be reduced by half. The table shown in FIG. 3 may be understood in the column direction of the table.

Unlike the low concentration and the medium concentration of ammonia, in the discharge of the high concentration of ammonia (e.g., in the case of an emergency ventilation, for example, in a fire occurrence), it may be possible to discharge the exhaust gas by opening the flow path at an entirety (ratio of 1) (e.g., 100% vent pipe opening) regardless of the influence of the wind speed.

In the event of the high ammonia concentration, an increase in pressure may occur within the receiver 68 and the piping, which may result in an explosion. For instance, when the discharge volume of the exhaust gas containing the high-concentration ammonia is restricted, the pressure builds up inside the receiver 68 and the piping, potentially causing an explosion. Accordingly, when the ammonia concentration is high, 100% of the ammonia-containing exhaust gas may be discharged to prevent the vessel from exploding.

It may be expressed that the flow path is open by 100 percent when the ammonia concentration is low. When the ammonia concentration is a medium concentration, the flow path can be open by 50 percent as half thereof.

In addition, the vessel of The vessel of the present embodiment includes a wind speed measuring unit 120 for measuring an external wind speed, and the controller 110 may be configured to control the valve 100 according to the wind speed sensed by the wind speed measuring unit 120. The wind speed measurement unit 120 may measure the wind speed around the vessel while the vessel is moving or is not moving. The wind speed measuring unit 120 is disposed adjacent to the vent mast 8 from which gas is discharged, and thus can measure the wind speed around the vent mast 8.

The controller 110 may increase the degree of opening of the valve 100 as the wind speed measured by the wind speed measuring unit 120 increases.

When the table of FIG. 3B is interpreted in a horizontal direction, as illustrated in FIG. 3B, the controller 110 may adjust the degree of opening of the valve 100 according to the wind speed measured through the wind speed measuring unit 120. For example, as the wind speed increases from high to low, the controller may lower the degree of opening of the valve 100 by half step by step.

The table shown in FIG. 3 may be understood in the horizontal direction. The controller 110 divides the wind speed measured by the wind speed measuring unit 120 into a high speed level, a medium speed level, and a low speed level, and may reduce the opening degree of the valve 100 by half in a level-change. It may be expressed that the valve is open by 100 percent when the wind speed is at the high speed level. When the wind speed is at the medium speed level, the valve can be open by 50 percent as 1/2 thereof. When the wind speed is at the low speed level, the valve can be open by 25 percent as 1/4 thereof.

When the measured wind speed exceeds 5m/s and is lower than or equal to 10m/s, this speed may be referred to as the high speed. When the measured wind speed exceeds 2.5m/s and is lower than or equal to 5m/s, this speed may be referred to as the medium speed. When the measured wind speed exceeds 0m/s and is lower than or equal to 2.5m/s, this speed may be referred to as the low speed.

The levels of the wind speed being defined based on 10m/s, 5m/s, and 2.5m/s is merely an example. The present disclosure is not limited thereto.

Therefore, when the speed of the wind is high and the emission concentration of ammonia is low, the valve 100 disposed in the exhaust flow path 90 may open the flow path at an entirety (ratio of 1) (e.g., 100% vent pipe opening) to discharge the exhaust gas. Since the concentration of the discharged ammonia gas is low and the wind speed is high, the discharged ammonia is spread quickly, so that the ammonia concentration around the vessel is not high, and thus it may be safely managed. In this case, the high speed may be greater than 10m/s, unlike that shown in FIG. 3.

When the speed of the wind is low and the emission concentration of ammonia is the medium concentration, the valve 100 disposed in the exhaust flow path 90 may open the flow path at a ratio of 0.5 X 0.25 (12.25% opening of the vent pipe) to discharge the exhaust gas. Since the discharged ammonia cannot be spread in a short time because the concentration of the discharged ammonia gas is high and the wind speed is also low, the amount of ammonia discharged through the vent mast 8 is reduced, so that the ammonia concentration around the vessel may be safely managed so as not to increase.

In addition, when the speed of the wind is a medium speed and the emission concentration of ammonia is the medium concentration, the valve 100 disposed in the exhaust flow path 90 may open the flow path at a ratio of 0.5 X 0.5 (25% of the entire opening ) to discharge the exhaust gas. Since it is the medium concentration of the ammonia gas discharged and the wind speed is also medium, the ammonia discharged is discharged differently from the above-described situation. Therefore, the flow path of the valve 100 is opened small compared to the case of high speed at medium concentration, and the flow path of the valve 100 is opened a lot compared to the case of low speed at medium concentration, so that the overall ammonia concentration around the vessel may be safely managed so as not to increase.

In this regard, the low concentration may mean a concentration of the ammonia corresponding to a general stop of the engine, such as when replacing the fuel in the engine. This may mean a situation in which the engine 20 uses ammonia as fuel and then discharges ammonia remaining in the engine 20 to use the other fuel than ammonia such as diesel.

The medium concentration may mean a concentration of ammonia corresponding to an emergency stop of the engine due to an engine problem. In a situation where various problems occur while using ammonia as fuel and the engine needs to be stopped, a relatively high concentration of ammonia may have to be quickly discharged, which may mean such a situation.

The high concentration refers to a concentration of ammonia corresponding to an emergency such as a fire. This situation includes a situation in which the engine should be stopped in a short time and ammonia is discharged therefrom.

Since the gas ammonia is temporarily stored in the receiver 68, the degree of opening and closing of the exhaust flow path using the valve 100 may be safely managed. In a state in which the valve 100 does not open the flow path at a large amount, a large amount of ammonia is accumulated in the receiver 68, and thus the ammonia concentration inside the receiver 68 may increase. On the other hand, in a situation in which the valve 100 opens the flow path at the large amount, a small amount of ammonia is accumulated in the receiver 68, so that the ammonia concentration inside the receiver 68 may decrease.

In a state in which the valve 100 closes the exhaust flow path, the ammonia discharged from the engine is stored in the receiver 68.

In the present embodiment, when the wind speed is constant, the discharged amount of the ammonia is controlled to decrease as the concentration of the discharged ammonia increases. In a situation in which ammonia having the constant ammonia concentration is discharged, the higher the wind speed, the better the discharged ammonia is diluted. Thus, in this case, the discharged amount of ammonia is controlled to increase.

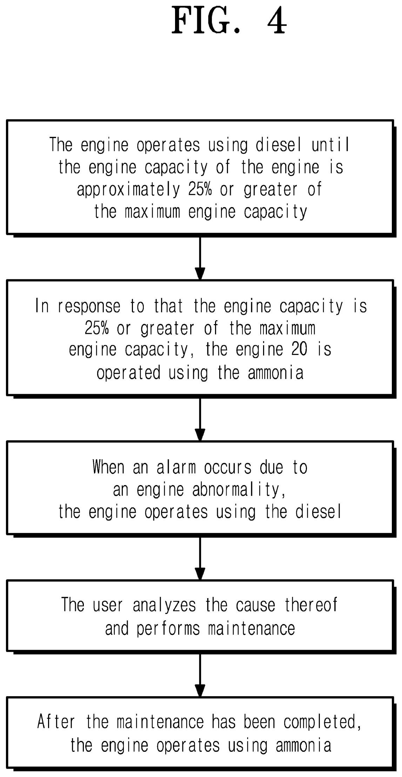

FIG. 4 is a diagram illustrating a process of changing a fuel supply mode to an engine.

Referring to FIG. 4, when the vessel 1 is operated, the vessel 1 operates the engine 20 using diesel until the engine capacity of the engine (20 of FIG. 1a) is approximately 25% or greater of the maximum engine capacity.

When the ammonia is used as fuel, the output required for the operation of the engine 20 may not be achieved. For this reason, diesel may be first used as fuel for the engine.

In response to that the engine capacity is 25% or greater of the maximum engine capacity, the ammonia is fed to the engine 20 without using diesel such that the engine 20 is operated using the ammonia.

While the engine is running using ammonia as fuel, an alarm occurs due to an engine abnormality. In this case, the supply of ammonia to the engine is stopped, and the ammonia remaining in the engine is discharged to the outside out of the engine. The ammonia may be discharged in the steps as described above with reference to FIGS. 1A to 3B. Then, in response to that the ammonia does not remain in the engine, the diesel is supplied to the engine again to drive the engine.

A situation in which a problem occurs while driving the engine using ammonia, such that the ammonia is not used as fuel occurs. Thus, the user analyzes the cause thereof and performs maintenance.

After the maintenance has been completed, and then, in response to that it is determined that the engine is in a normal operating situation, the diesel supply to the engine may be stopped, and ammonia may be supplied as fuel again to drive the engine using ammonia.

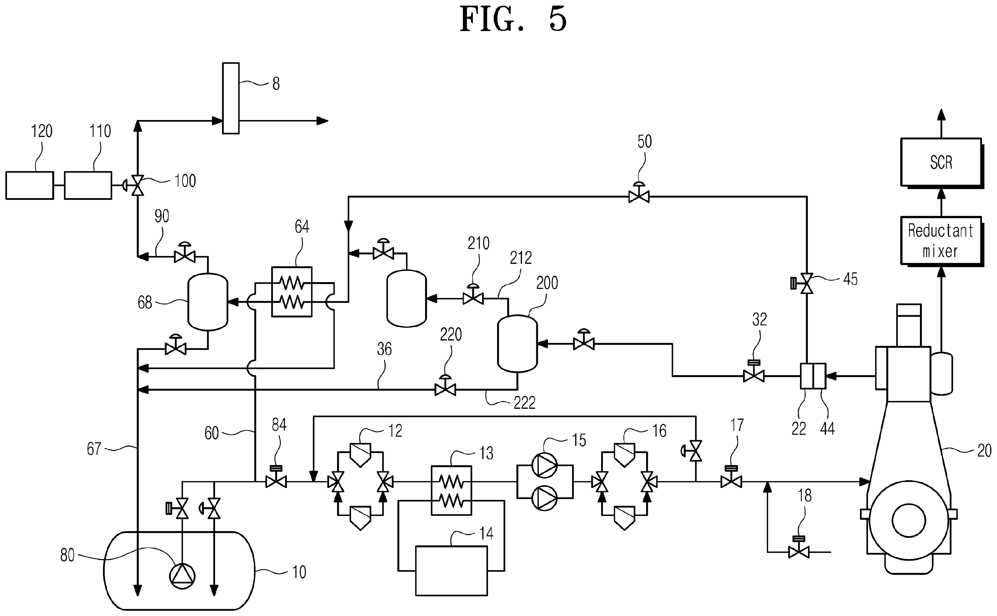

FIG. 5 is a diagram illustrating the concept of a second embodiment of the present disclosure,

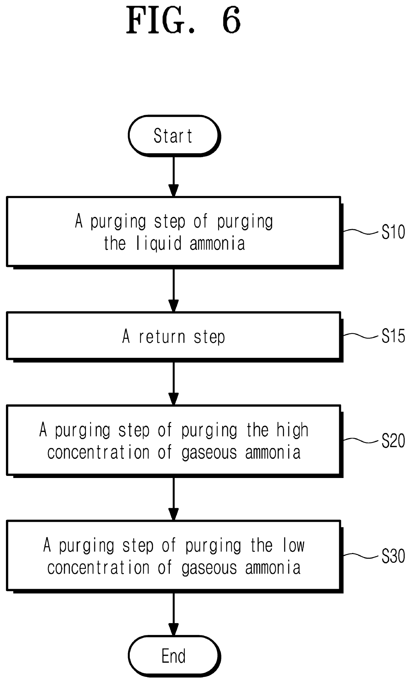

FIG. 6 is a diagram illustrating a control flow of the second embodiment.

Unlike the first embodiment of FIG. 1A to FIG. 1C, the second tank (40 of FIG. 1a) for collecting gaseous ammonia of high concentration may be omitted in the second embodiment of FIG. 5. For example, a tank 200 may serve as the second tank 40 of FIGS. 1A to 1C.

In the second embodiment, the same parts as those of the first embodiment will be omitted, and the differences therebetween will be described. The description of the first embodiment is applied to the parts omitted in the second embodiment.

Referring to FIGS. 5 and 6, the vessel of the second embodiment includes the fuel tank 10 in which ammonia fuel is stored, the engine 20 configured to receive the ammonia stored in the fuel tank 10 and to combust the same, and the tank 200 in which liquid ammonia or gaseous ammonia discharged from the engine 20 is collected.

The vessel of the present embodiment includes a first flow path 212 to which gaseous ammonia stored in the tank 200 is discharged from the tank 200, and a first valve 210 for opening and closing the first flow path 212. In this regard, the first valve 210 may be a pressure control valve capable of controlling the pressure of the tank 200. That is, the first valve 210 may close the flow path until the internal pressure of the tank 200 reaches a desired pressure. When the internal pressure exceeds the desired pressure, the first valve 210 may partially open the flow path to maintain the desired pressure.

The vessel of the present embodiment includes a second flow path 222 to which liquid ammonia stored in the tank 200 is discharged from the fuel tank 10, and a second valve 220 for opening and closing the second flow path 222. When the second valve 220 closes the second flow path 222, the liquid ammonia stored in the tank 200 is maintained in a state stored in the tank 200. When the second valve 220 opens the second flow path 222, the liquid ammonia stored in the tank 200 is discharged from the tank 200.

In the present embodiment, after the liquid ammonia flows from the engine 20 to the tank 200, the gaseous ammonia flows from the engine 20 to the tank 200. That is, liquid ammonia and gaseous ammonia remaining in the engine may sequentially flow to the tank 200.

First, it is possible for the engine 20 to stop using ammonia fuel while using ammonia as fuel. In the second embodiment, unlike the first embodiment, after the ammonia liquid purging step S10, a return step S15 is performed.

In the return step S15, the liquid ammonia stored in the tank 200 is returned to the fuel tank 10 through a return flow path 36. In the ammonia liquid purging step, liquid ammonia remaining in the engine flows to the tank 200. Thus, it is difficult to additionally store gaseous ammonia in the tank 200 in a state in which liquid ammonia remains therein.

Accordingly, the return step S15 is performed, such that the liquid ammonia in in the tank 200 is discharged through the return flow path 36 to the fuel tank 10. Then, the high concentration ammonia gas purging step S20 and the low concentration ammonia gas purging step S30 are performed.

The liquid ammonia stored in the tank 200 may be returned to the fuel tank 10, unlike the first embodiment in which the liquid ammonia flow path from the tank 200 is connected to the fuel supply line. For example, in the first embodiment, since the tank 200 receives only liquid ammonia, an appropriate amount of liquid ammonia may be supplied to the fuel supply line. Alternatively, in the second embodiment, since the tank 200 should store both liquid ammonia and gaseous ammonia therein, an entirety of the liquid ammonia from the tank 200 may be returned to the fuel tank 10 and then the gaseous ammonia may be stored in the tank 200. Since the entirety of liquid ammonia is returned to the fuel tank 10, the return flow path 36 may be connected to the liquid return line 67 rather than the fuel supply line.

The liquid return line 67 may be a line connecting the receiver 68 and the fuel tank 10 to each other.

A process in which the liquid ammonia is stored in the tank 200, and then, a high concentration of gaseous ammonia is stored therein is performed. The pressure of the tank 200 when liquid ammonia flows from the engine 20 to the tank 200 is greater than the pressure of the tank 200 when a high concentration of gaseous ammonia flows from the engine 20 to the tank 200.

In order to remove the ammonia remaining in the engine 20, the valve 18 opens the flow path and thus, nitrogen is introduced into the engine 20 through the flow path. In this regard, the first valve 210 is controlled such that while the liquid ammonia flows from the engine to the tank 200, the tank 200 maintains a higher pressure than that of the tank 200 while a high concentration of gaseous ammonia flows from the engine 20 to the tank 200.

That is, the first valve 210 is controlled such that while the liquid ammonia flows, the internal pressure of the tank 200 is maintained at approximately 25bar, whereas while the gaseous ammonia of a high concentration flows, the internal pressure of the tank 200 is maintained at approximately 5bar.

When the internal pressure of the tank 200 is maintained at a high level, the ammonia stored in the tank 200 may maintain a liquid state, and the ammonia discharged from the engine 20 may also flow to the tank 200 in a liquid state. After the liquid ammonia has been discharged therefrom, the gaseous ammonia remains in the engine. In this regard, the first valve 210 may be controlled such that the pressure inside the tank 200 may be lowered to about 5bar. Under this condition, gaseous ammonia remaining in the engine 20 may flow to the tank 200 and the ammonia may maintain the gaseous state in the tank 200.

While liquid ammonia flows from the engine 20 to the tank 200, the second valve 220 closes the second flow path 222. Accordingly, the first valve 210 is controlled so that the internal pressure of the tank 200 maintains a high pressure level, thereby allowing ammonia to maintain a gaseous state. After the liquid ammonia has sufficiently flowed to the tank 200, the second valve 220 opens the second flow path 222 to allow the liquid ammonia to flow to the fuel tank 10 to be used as fuel.

The second valve 220 closes the second flow path 222 while a high concentration of gaseous ammonia flows from the engine 20 to the tank 200. When the second valve 220 opens the second flow path 222 such that the liquid ammonia stored in the tank 200 has sufficiently flowed to the fuel tank 10, the second valve 220 is closed and the gaseous ammonia of the high concentration starts to be stored in the tank 200. Since the second flow path 222 is closed using the second valve 220, the first valve 210 may be controlled such that the internal pressure of the tank 200 is lower than the pressure thereof when the liquid ammonia is stored therein.

The second valve 220 closes the second flow path 222 while the high concentration of gaseous ammonia is discharged from the tank 200 to the outside out of the tank 200. In addition, the first flow path 212 is opened using the first valve 210 so that the high concentration of gaseous ammonia is discharged from the tank 200 and guided to an apparatus in which the gaseous ammonia may be reliquefied.

After the high concentration ammonia gas has flowed to the tank 200, the concentration sensor 44 measures the ammonia concentration discharged from the engine 20. When the gas ammonia concentration measured by the concentration sensor 44 is low, it is determined that the low concentration ammonia gas is discharged therefrom. In response thereto, the first valve 32 is closed and the valve 45 is opened so that the ammonia gas flows to another flow path without flowing through the tank 200. On the other hand, in response to that the liquid ammonia and the high concentration ammonia gas are discharged from the engine 20, the valve 45 closes the flow path, so that the liquid ammonia and the high concentration ammonia gas may be guided to the tank 200.

The vessel of the second embodiment performs a first step in which the engine 20 is driven with ammonia fuel and stopped, a second step in S10 (e.g., an ammonia liquid purging step) in which liquid ammonia remaining in the engine 20 is guided to the tank 200, and a third step in S20 (e.g., a high concentration ammonia gas purging step) in which gaseous ammonia of a high concentration remaining in the engine is collected into the tank. In this case, the tank in which the gaseous ammonia is stored is the tank in which liquid ammonia is stored.

In addition, the vessel of the second embodiment performs a fourth step in S30 (for example, a low-concentration ammonia gas purging step) of discharging a low-concentration gaseous ammonia to a flow path other than a flow path to the tank 200. The concentration of the low-concentration gaseous ammonia discharged in the fourth step is lower than the concentration of the high-concentration gaseous ammonia discharged in the third step, and thus, the low-concentration gaseous ammonia discharged in the fourth step is not stored in the tank 200.

The vessel of the present embodiment performs a step of returning the stored liquid ammonia to the fuel tank 10 after the liquid ammonia is stored in the tank 200. This is because, when the gas ammonia is additionally stored in the tank 200 in a state in which the liquid ammonia is stored in the tank 200, not only the space of the tank 200 is insufficient, but the environment in which the liquid ammonia is stored and the environment in which the gas ammonia is stored are different from each other. For example, when the pressure of the tank 200 is lowered in a state in which the liquid ammonia is stored in the tank 200, the liquid ammonia is converted into gaseous ammonia, and thus the amount of liquid ammonia to be returned to the fuel tank 10 may be reduced.

After the liquid ammonia is returned from the tank 200 to the fuel tank 10, gaseous ammonia is guided to the tank 200 while the pressure of the tank 200 is lowered.

In the second embodiment, unlike the first embodiment, the tank in which liquid ammonia is stored and the tank in which gas ammonia is stored are not distinguished from each other, but the tank in which liquid ammonia is stored acts as the tank in which gas ammonia is stored , so that the overall configuration of the vessel may be simplified.

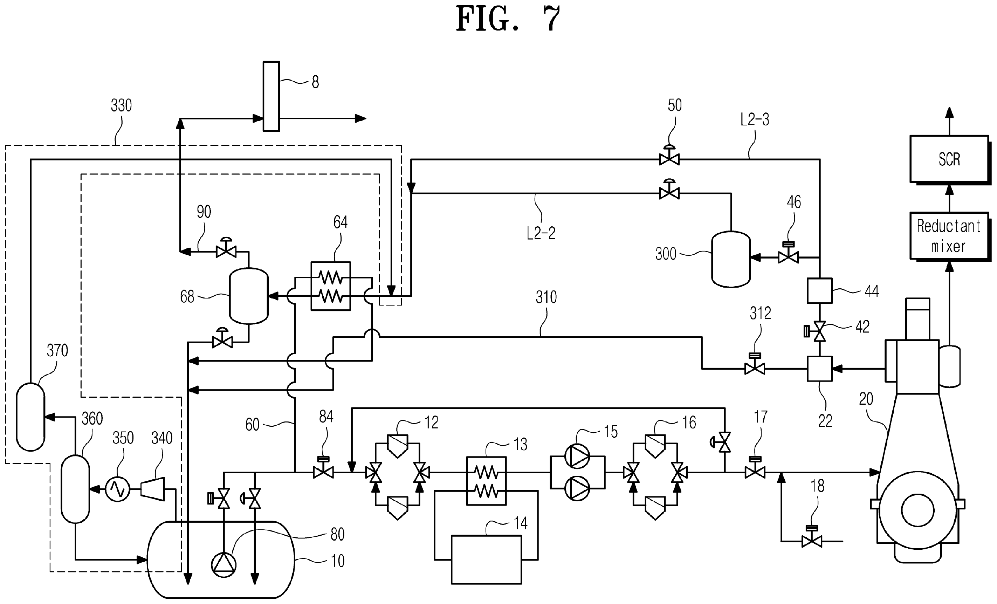

FIG. 7 is a diagram illustrating a concept of a third embodiment of the present disclosure.

In the third embodiment, the same parts as those of the first embodiment or the second embodiment will not be described, and the differences therebetween will be described. The description of the first embodiment or the second embodiment is applied to the parts omitted in the third embodiment.

In the third embodiment, unlike the first embodiment or the second embodiment, the tank 200 may be omitted.

The vessel of the third embodiment of FIG. 7 may treat non-condensable gas in the fuel tank 10 in which the ammonia fuel is stored using a non-condensable gas treatment apparatus 330. The non-condensable gas in the fuel tank 10 is treated such that the liquid ammonia purged from the engine 20 may be directly supplied to the fuel tank 10 along a flow path 310 without omitting the tank 200 of FIG. 5.

The vessel of the third embodiment includes the fuel tank 10 in which ammonia fuel is stored, the engine 20 which the ammonia stored in the fuel tank 10 is supplied to and which combusts the supplied ammonia, the flow path 310 for guiding liquid ammonia discharged from the engine 20 to the fuel tank 10, a tank 300 in which gaseous ammonia discharged from the engine 20 is collected, and the non-condensable gas treatment apparatus 330 for treating the non-condensable gas in the fuel tank 10.

The non-condensable gas treatment apparatus 330 includes a compressor 340 for compressing the gas of the fuel tank 10 and a gas-liquid separator 360 for separating the fluid compressed by the compressor 340 into liquid and gas. A heat exchanger 350 provided at an outlet end of the compressor to cool the fluid compressed by the compressor is provided. The heat exchanger 350 is disposed between the compressor and the gas-liquid separator 360.

The liquid ammonia separated by the gas-liquid separator 360 is guided to the fuel tank 10.

The vessel of the third embodiment includes a buffer tank 370 for storing the gas separated by the gas-liquid separator 360 therein, and the gas includes gaseous ammonia and non-condensable gas. That is, the gas-liquid separator 360 separates the liquid from the gas, wherein the liquid includes liquid ammonia and the gas includes gaseous ammonia and non-condensable gas. The non-condensable gas treatment apparatus 330 may separate the non-condensable gas, for example, nitrogen gas, that may be present in the fuel tank 10 from the fuel tank.

The gaseous ammonia and the non-condensable gas discharged from the buffer tank 370 may flow to the heat exchanger 64. The non-condensable gas may be mixed with the gaseous ammonia discharged from the engine 20 while flowing to the heat exchanger 64. As the gaseous ammonia and the non-condensable gas flow through the heat exchanger 64 together with the gaseous ammonia discharged from the engine 20 along the 2-2 flow path L2-2 and the 2-3 flow path L2-3, a portion of the gaseous ammonia may be converted into liquid ammonia. The liquid ammonia stored in the receiver 68 is returned to the fuel tank 10, and the gaseous ammonia and the non-condensable gas are discharged to the outside through the vent mast 8.

The vessel of the present embodiment includes a valve 312 provided in the flow path 310 and configured to control the flow of liquid ammonia discharged from the engine 20. When the valve 312 opens the flow path, the liquid ammonia discharged from the engine 20 flows to the fuel tank 10 along the flow path 310, whereas when the valve 312 closes the flow path, the flow of the liquid ammonia in the engine 20 is blocked, so that the liquid ammonia does not flow to the fuel tank 10.

The non-condensable gas treatment apparatus 330 may be always driven. It is possible for the non-condensable gas treatment apparatus 330 to operate regardless of whether the engine 20 is driven. The engine 20 and the non-condensable gas treatment apparatus 330 may be driven independently of each other.

The operation of the non-condensable gas treatment apparatus 330 may mean that the compressor 340 is driven. The compressor 340 compresses the gas stored in the fuel tank 10. The heat exchange on the compressed gas is performed through the heat exchanger 350. Then, the stored fluid (including liquid and gas) is guided to the gas-liquid separator 360.

Alternatively, the non-condensable gas treatment apparatus 330 may be driven only while the engine 20 is driven, or may be driven while the engine is stopped.

When the non-condensable gas treatment apparatus 330 is driven, a process of compressing and cooling the gas inside the fuel tank 10 is performed. Thus, it is possible to prevent an excessive increase in the pressure inside the fuel tank 10.

In addition, in the present embodiment, since liquid ammonia flows from the engine 20 to the fuel tank 10 through the flow path 310, the non-condensable gas, for example, nitrogen, included in the liquid ammonia may also flow to the fuel tank 10. Since a separate tank is not provided in the flow path 310, liquid ammonia discharged from the engine 20 is directly guided to the fuel tank 10 through the flow path 310. When the non-condensable gas is stored in the fuel tank, the pressure of the fuel tank may be excessively increased. For this reason, the pressure of the fuel tank may be adjusted using the non-condensable gas treatment apparatus 330.

Since the gas discharged from the fuel tank 10 includes the non-condensable gas and toxic gaseous ammonia, the gas may be treated through the heat exchanger 64 in the vessel 1, and then discharged to the outside, rather than using a general treatment scheme in which the gas is directly discharged to the outside.

The gaseous ammonia and the non-condensable gas discharged from the buffer tank 370 are guided to the heat exchanger 64 and are treated therein while being cooled in the same manner as in the above-described embodiment. In this regard, even though the non-condensable gas is cooled while flowing through the heat exchanger 64, the phase of the non-condensable gas is not changed into a liquid, and the non-condensable gas is discharged to the outside through the vent mast 8.

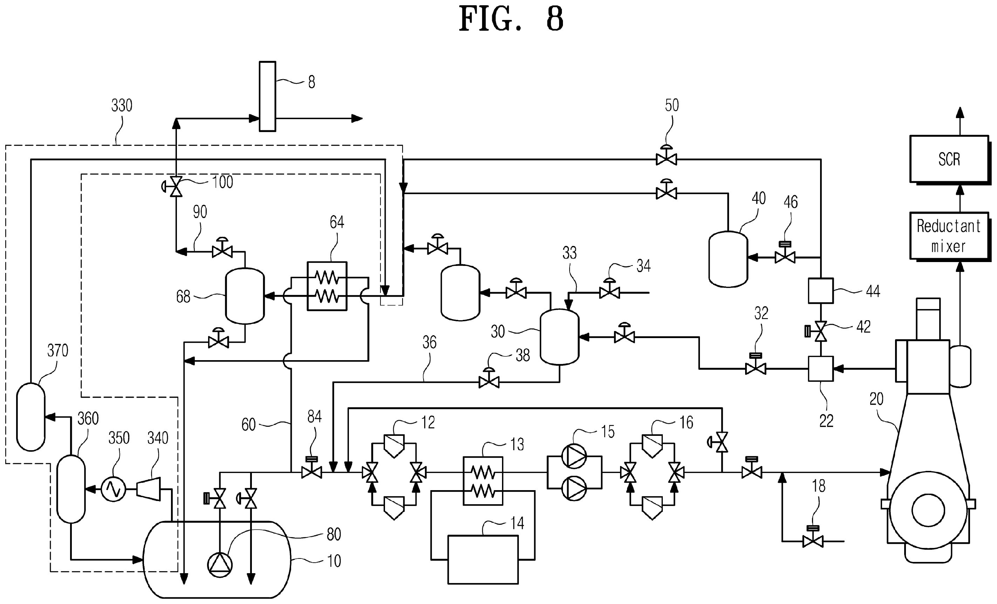

FIG. 8 is a diagram illustrating a modified concept of the third embodiment.

In the modified concept of the third embodiment, the same parts as those of the first to third embodiments will be omitted, and the differences therebetween will be described. The descriptions of the first to third embodiments are applied to the parts that are omitted from the modified concept of the third embodiment.

Referring to FIG. 8, the vessel of the present embodiment includes the fuel tank 10 in which ammonia fuel is stored, the engine 20 which ammonia stored in the fuel tank 10 is supplied to and which combusts the same, the first tank 30 in which liquid ammonia discharged from the engine 20 is collected, the second tank 40 in which gaseous ammonia discharged from the engine is collected, and the non-condensable gas treatment apparatus 330 for treating the non-condensable gas from the fuel tank.

Unlike the third embodiment, in the modified example of the third embodiment, there is a difference in that the first tank 30 for storing liquid ammonia discharged from the engine 20 therein is provided.

A process in which the liquid ammonia is collected into the first tank 30, and then, the gas ammonia is collected into the second tank 40 is performed. The liquid ammonia collected in the first tank 30 may be supplied to the engine 20 for reuse as fuel.

Since the configuration and operation of the non-condensable gas treatment apparatus 330 are the same as those of the third embodiment, redundant descriptions will be omitted. However, in the modified example, unlike the third embodiment of FIG. 7, the gaseous ammonia discharged from the first tank 30 after storing the liquid ammonia is also cooled using the heat exchanger 64.

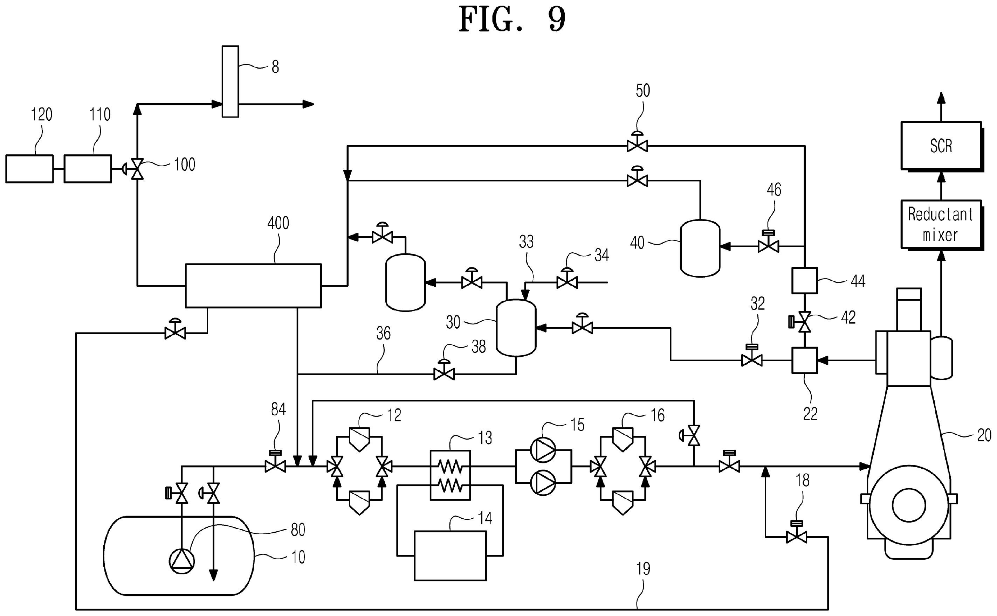

FIG. 9 is a diagram illustrating the concept of a fourth embodiment.

In the fourth embodiment, the same parts as those of the first to third embodiments will not be described, and the differences therebetween will be described. The descriptions of the first to third embodiments are applied to the parts omitted in the fourth embodiment.

Unlike the first to third embodiments, the vessel of the fourth embodiment may further include a nitrogen separator 400 for separating nitrogen, which is a non-condensable gas, from gaseous ammonia. Further including the nitrogen separator 400 may allow the internal nitrogen to be recycled without an additional supply of nitrogen to discharge liquid/gaseous ammonia from the engine 20.

The vessel of the present embodiment includes the fuel tank 10 in which ammonia fuel is stored, the engine 20 which ammonia stored in the fuel tank 10 is supplied to and which combusts the same, the first tank 30 in which liquid ammonia discharged from the engine 20 is collected, the second tank 40 in which gaseous ammonia discharged from the engine 20 is collected, and the nitrogen separator 400 separating nitrogen gas from the fluid discharged from the second tank 40.

Gas ammonia is stored in the second tank 40. In this regard, there is a high probability that when the gas ammonia is collected, a non-condensable gas such as nitrogen gas is collected together. Liquid ammonia is stored in the first tank 30, and the internal pressure of the first tank 30 is higher than the internal pressure of the second tank 40 in a process or in a state in which liquid ammonia is stored in the first tank 30. Therefore, it is unlikely that nitrogen gas is contained in the first tank 30. In the present embodiment, based on this technical content, a technique of separating nitrogen gas based on the fluid of the second tank 40 in which gaseous ammonia is collected has been conceived.

The nitrogen separated by the nitrogen separator 400 may be discharged to a supply flow path through which ammonia is supplied from the fuel tank 10 to the engine 20, and may be introduced into the engine 20. In another example, nitrogen flows along the supply flow path, and is injected into the engine 20 when the flow path is opened using the valve 18, or is not injected into the engine 20 when the flow path is closed using the valve 18.

The ammonia separated in the nitrogen separator 400 is guided to the fuel tank 10 and used as a fuel for driving the engine 20.

The nitrogen separator 400 is a component that separates nitrogen and ammonia in the gas discharged from the engine 20 from each other so that the both may be reused. Therefore, nitrogen may be used again for the purpose of discharging the ammonia from the engine 20 as described above. In addition, ammonia may be used again for driving the engine 20.

The vessel of the present embodiment includes the first valve 32 configured to open and close a flow path extending from the engine 20 to the first tank 30, the second valve 42 configured to open and close a flow path extending from the engine 20 to the second tank 40, and a third valve 46 configured to open and close a flow path extending from the second valve 42 to the second tank 40.

The main purpose of the first tank 30 is to store therein the liquid ammonia discharged from the engine 20. However, gas ammonia may be generated in the first tank 30 or a small amount of gas ammonia may be introduced into the first tank 30 depending on circumstances, and such gas ammonia may be transferred to the nitrogen separator 400 which separates the gas into the nitrogen and ammonia.

Gaseous ammonia discharged from the engine 20 is stored in the second tank 40. The gaseous ammonia is initially collected after the liquid ammonia is discharged from the engine 20. Thus, the second tank 40 stores therein the gaseous ammonia of a relatively high concentration. While the high concentration gaseous ammonia is discharged from the engine 20, the first valve 32 closes the flow path, the second valve 42 opens the flow path, and the third valve 46 opens the flow path, so that the high concentration gaseous ammonia flows to the second tank 40. In this regard, the fourth valve 50 closes another flow path. The gaseous ammonia discharged from the second tank 40 may be guided to the nitrogen separator 400, and the nitrogen separator 400 may separate the gas into nitrogen and ammonia.

The gas ammonia from the engine 20 may not be stored in a separate tank such as the first tank 30 and the second tank 40, and may be guided to the nitrogen separator 400. This timing is after the high concentration gaseous ammonia is discharged from the engine 20 and after the time duration has elapsed after the liquid ammonia is discharged. Thus, the concentration of the gaseous ammonia discharged from the engine 20 is relatively low. While the gas ammonia of the low concentration is discharged from the engine 20, the first valve 32 closes the flow path, the second valve 42 opens the flow path, and the third valve 46 closes the flow path, so that the gas ammonia does not flow to the first tank 30 and the second tank 40 and flows along the flow path in which the fourth valve 50 is located. In this regard, the fourth valve 50 opens the flow path so that the gaseous ammonia may flow to the flow path in which the fourth valve 50 is disposed, and may flow to the nitrogen separator 400. Nitrogen and ammonia may be separated from each other in the nitrogen separator 400.

The nitrogen separated in the nitrogen separator 400 may be resupplied to the engine 20 along the nitrogen resupply flow path 19 and reused for the operation of discharging ammonia remaining in the engine 20.

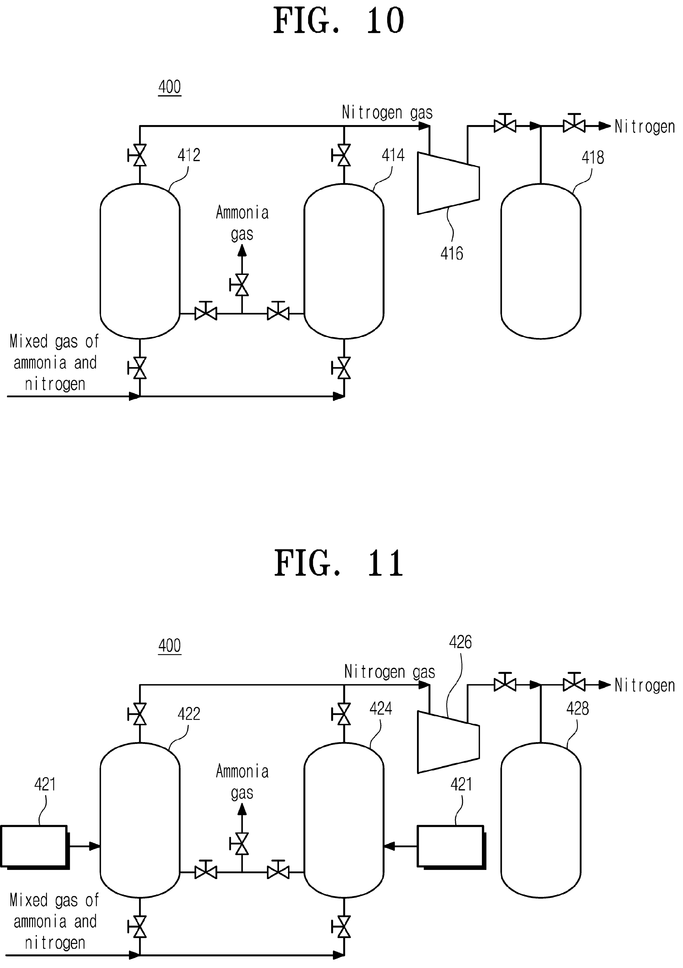

FIG. 10 is a diagram illustrating a first application example of the nitrogen separator of the fourth embodiment.

Referring to FIG. 10, the nitrogen separator may be of a PSA (Pressure Swing Absorption) type. In this application example, an adsorbent is used to separate the ammonia gas from the mixed gas, and the ammonia gas in the adsorbent is removed therefrom by lowering the pressure to regenerate the adsorbent.

The nitrogen separator of the first application example includes two adsorbents 412 and 414, a nitrogen compressor 416, a nitrogen storage tank 418, and a plurality of valves.

When the mixture gas of ammonia and nitrogen is supplied to the two adsorbents 412 and 414 through the valve, respectively, the two adsorbents 412 and 414 adsorb the ammonia gas to separate ammonia therefrom. The nitrogen gas separated from the ammonia using the two adsorbents 412 and 414 is discharged from the two adsorbents 412 and 414, compressed in the nitrogen compressor 416, and stored in the nitrogen storage tank 418.

In addition, nitrogen stored in the nitrogen storage tank 418 may be discharged in a situation in which the nitrogen is supplied to the engine 20.

FIG. 11 is a diagram illustrating a second application example of the nitrogen separator of the fourth embodiment.

Referring to FIG. 11, the nitrogen separator may be of a TSA (Temperature Swing Absorption) type. In this application example, an adsorbent is used to separate the ammonia gas from the mixed gas, and the ammonia gas in the adsorbent is removed therefrom by lowering the pressure and raising the temperature to regenerate the adsorbent.

The nitrogen separator of the second application includes two adsorbents 422 and 424, a nitrogen compressor 426, a nitrogen storage tank 428, and a heater 421.

When the mixture gas of ammonia and nitrogen is supplied to the two adsorbents 412 and 414 through the valve, the two adsorbents 422 and 424 adsorb the ammonia gas to separate ammonia therefrom. In this case, heat may be supplied from the heater 421 to the two adsorbents 422 and 424. The nitrogen gas separated from the two adsorbents 422 and 424 is discharged from the two adsorbents 422 and 424, compressed in the nitrogen compressor 426, and stored in the nitrogen storage tank 428.

In addition, nitrogen stored in the nitrogen storage tank 428 may be discharged in a situation in which the nitrogen is supplied to the engine 20.

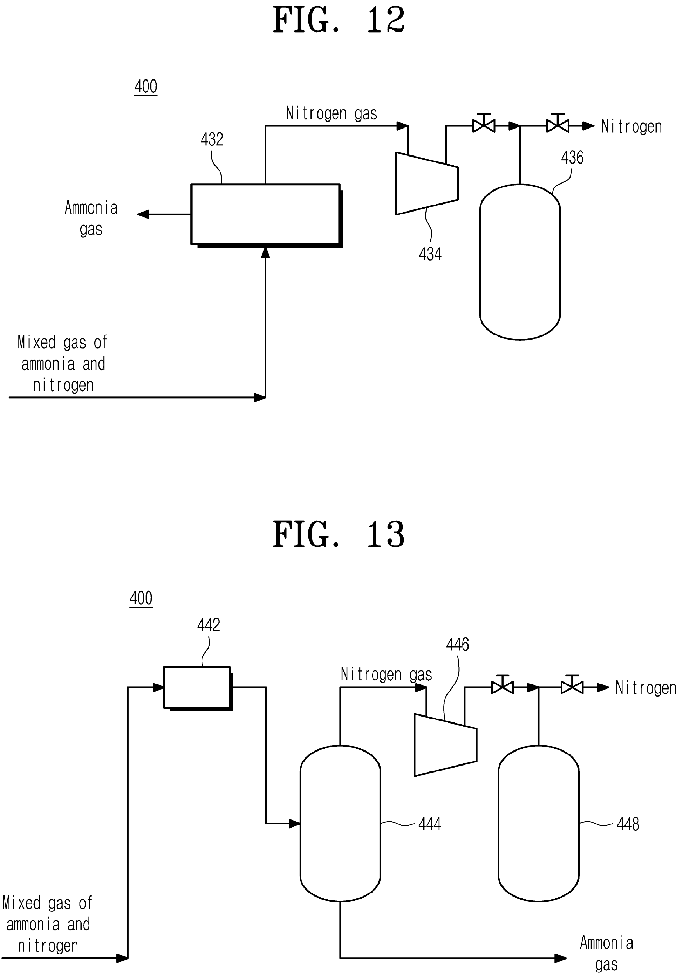

FIG. 12 is a diagram illustrating a third application example of the nitrogen separator of the fourth embodiment.

Referring to FIG. 12, the nitrogen separator may include a separation membrane. In this application example, ammonia and nitrogen gas in the mixed gas are separated from each other using a separation membrane.

The ammonia and nitrogen mixed gas is guided to the separation membrane 432 through a valve. In the separation membrane 432, the ammonia gas is separated from the nitrogen. Then, only the ammonia gas is supplied to the fuel tank 10, and the nitrogen gas is compressed in the nitrogen compressor 434 and stored in the nitrogen storage tank 436.

In addition, nitrogen stored in the nitrogen storage tank 428 may be discharged in a situation in which the nitrogen is supplied to the engine 20.

FIG. 13 is a diagram illustrating a fourth application example of the nitrogen separator of the fourth embodiment.

Referring to FIG. 13, the nitrogen separator includes a cooler that condenses ammonia into a liquid. In this application example, the nitrogen separator separates the ammonia and nitrogen from each other by lowering the temperature of the mixed gas of ammonia and nitrogen to condense the ammonia gas into the liquid.

The ammonia and nitrogen mixture gas is guided to the cooler 442 through the valve. The ammonia gas and nitrogen gas are separated from each other in the cooler 442. In this regard, the mixed gas is cooled to change the ammonia gas into liquid ammonia. In this regard, the nitrogen gas is not changed into a liquid. Thus, the ammonia and nitrogen can be separated from each other. The ammonia gas is separated from the nitrogen and then is supplied to the fuel tank 10, while the nitrogen gas is compressed in the nitrogen compressor 446 and stored in a nitrogen storage tank 448.

In addition, nitrogen stored in the nitrogen storage tank 448 may be discharged in a situation in which the nitrogen is supplied to the engine 20.

The configurations of the embodiment as shown in FIGS. 1A to 13 are not exclusive from each other and may be combined with each other.

FIG. 14 is a diagram illustrating a technical concept commonly applicable to the above-described embodiments.

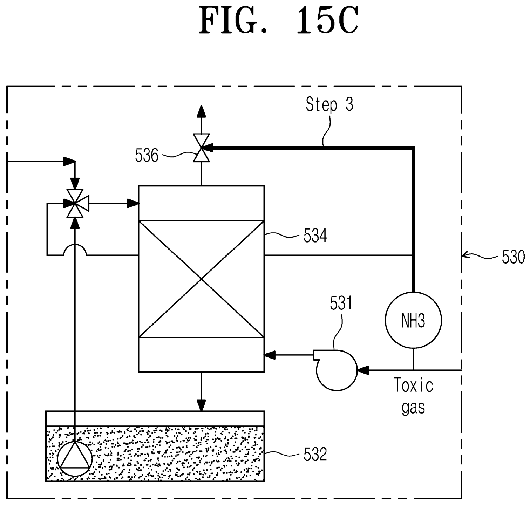

FIG. 15 is a diagram specifically illustrating FIG. 14. FIG. 15A is a diagram specifically illustrating the first step Step1 of FIG. 14. FIG. 15B is a diagram specifically illustrating the second step Step2 of FIG. 14. FIG. 15C is a diagram specifically illustrating the third step Step3 of FIG. 14.

Specifically, FIG. 15A illustrates a first step of driving the scrubber, FIG. 15B illustrates a second step of driving the scrubber, and FIG. 15c illustrates a third step of driving the scrubber.

Referring to FIGS. 14 and 15, an accommodation 510 and a scrubber 530 for purifying the air sucked through the air intake 520 of the accommodation 510 are included in the vessel of the present embodiment. The scrubber 530 includes an ammonia reaction unit 534, a cleaning water storage unit 532, and a valve 536 for opening and closing a flow path through which the air discharged from the scrubber 530 flows.

The accommodation 510 refers to a space where an operator who operates a vessel resides or performs work, and is installed on the vessel deck. As air is introduced through the air intake 520, air may be supplied into the accommodation 510. The scrubber 530 may purify the air suctioned from the air intake 520 to provide the purified air to the accommodation 510.

While the air supplied to the scrubber 530 circulates through the ammonia reaction unit 534 and the cleaning water storage unit 532, the ammonia amount therein is reduced. Thus, the air from which ammonia is removed is provided to the accommodation 510.

The ammonia reaction unit 534 may increase a contact area between the air supplied into the scrubber 530 and the cleaning water to allow the ammonia and the cleaning water to be better mixed with each other.

The cleaning water storage unit 532 stores therein the cleaning water used in the scrubber 530. The ammonia is dissolved in the cleaning water storage unit 532. Thus, when the use time of the scrubber 530 increases or a high concentration of ammonia gas is introduced into the air intake 520, the ammonia concentration of the cleaning water storage unit 532 increases.

In order to provide the air from which ammonia is removed to the accommodation 510, the scrubber 530 is operated in a varying manner according to the concentration of ammonia contained in the air supplied from the scrubber 530.

Since the vessel includes the fuel tank in which ammonia fuel is stored and the engine to which ammonia stored in the fuel tank is supplied and which combust the same, there is a possibility that ammonia may leak from the fuel tank or the engine. There is a high possibility that ammonia gas leaks from an ammonia leakage source 502, and there is a possibility that the ammonia leaked from the leakage source 502 may flow to the air intake 520.

It is possible for an ammonia sensor provided adjacent to the air intake 520 or the scrubber 530 to measure the concentration of ammonia.

In the present embodiment, the scrubber 530 is operated in a varying manner based on the concentration of the ammonia included in the air, that is, the high concentration, medium concentration, and normal concentration. The high concentration, medium concentration, and normal concentration are values which may be changed according to the operator or situation, and may be changed in consideration of the purification performance of the scrubber. The normal concentration may mean a case in which there is little ammonia leakage. The medium concentration may mean a range in which ammonia has a slight effect on the human body. The high concentration may mean a range in which the human body may be sufficiently affected due to the occurrence of a problem such as an engine.

As shown in FIG. 15A, the first step Step1 is performed when the concentration of the ammonia is the normal concentration.

When it is determined based on the measurement from the ammonia sensor that the concentration of the ammonia is the normal concentration, the scrubber 530 circulates the air in a closed loop, purifies the air, supplies the purified air to the flow path. While air is suctioned from the air intake 520 under an operation of a fan 531 and circulates along the cleaning water storage unit 532 and the ammonia reaction unit 534 in a closed loop, ammonia in the suctioned air may be removed.

In this regard, a valve 536 may open the flow path such that the purified air flows into the accommodation 510.

As shown in FIG. 15B, the second step Step2 is performed when the concentration of the ammonia is the medium concentration.

When it is determined based on the measurement from the ammonia sensor that the concentration of the ammonia is the medium concentration, the scrubber 530 is controlled to remove the ammonia at a larger amount than when the concentration of the ammonia is the normal concentration.

Basically, as in the normal concentration, the scrubber 530 circulates the air in a closed loop, purifies the air, and supplies the purified air to the flow path.

However, supplying new cleaning water to the cleaning water storage unit 532 may allow the ammonia concentration in the cleaning water storage unit 532 to be prevented from increasing. When the ammonia concentration in the cleaning water storage unit 532 increases, it is difficult for ammonia to melt into the cleaning water storage unit 532. Even though the air circulates through the cleaning water storage unit 532, ammonia is not sufficiently removed therefrom. Therefore, unlike FIG. 15A, new cleaning water (fresh water) is additionally supplied to reduce the ammonia concentration in the cleaning water storage unit 532.

In this regard, the valve 536 may open the flow path such that the purified air is supplied into the accommodation 510.

As shown in FIG. 15C, the third step step3 is performed when the concentration of the ammonia is the high concentration.

When it is determined based on the measurement from the ammonia sensor that the concentration of the ammonia is the high concentration, the valve 536 blocks the flow path so that the air discharged from the scrubber 530 is not supplied to the flow path.

When the ammonia concentration corresponds to a high concentration, it is difficult to remove ammonia from the air even though the scrubber 530 is used, and thus it is not preferable to supply such air to the accommodation 510 in which the operator lives. Accordingly, when the high concentration ammonia is detected, the supply of air to the cleaning water storage unit 532 and the ammonia reaction unit 534 through the operation of the fan 531 may be blocked, unlike the case in which the concentration of the ammonia is the medium or normal concentration.

In this regard, the valve 536 blocks the flow path, so that external air is not substantially introduced into the accommodation 510.

FIG. 16 is a diagram illustrating another technical concept commonly applicable to the above-described embodiment.

FIGS. 17 to 19 are diagrams specifically illustrating the technical concept of FIG. 16.

FIG. 16A is a side view of the vessel, and FIG. 16B is a top view of the vessel. As shown in FIG. 16B, the air intake includes a first air intake 523 provided at the right side of the accommodation 510 and a second air intake 526 provided at the left side of the accommodation 510 when being viewed in a direction in which the vessel moves forwards. The first air intake 523 is disposed in front of the second air intake 526 when being viewed in the forward movement direction of the vessel. The first air intake 523 is disposed on the right side compared to the second air intake 526. The air flowing in the right direction of the accommodation 510 is sucked in the first air intake 523. The second air intake 526 is disposed at the left side compared to the first air intake 523. The air flowing in the left direction of the accommodation 510 is sucked in the second air intake 526.

The first air intake 523 and the second air intake 526 may be separated from each other and provided at different positions and may suck air flowing at different portions of the accommodation 510. Accordingly, when a problem occurs in any one intake, air may be supplied to the accommodation 510 using the other intake.

The air suctioned through the first air intake 523 and the second air intake 526 is guided to the scrubber 530 through the duct 512. The two air portions respectively suctioned from the two intakes may be merged with each other in one duct 512, and the merged air may be purified by the scrubber 530 disposed in the duct 512. The two air portions respectively suctioned from the two intakes are supplied to the commonly used scrubber, and the merged air is purified thereby.

A first damper 522 for blocking the air suctioned from the first air intake 523 and a second damper 527 for blocking the air suctioned from the second air intake 526 are include in the vessel of the present embodiment.

In addition, a controller (not shown) may control the fan 528 provided in the duct 512 to adjust the amount of air sucked from each intake. The fan 528 may be disposed in the duct 512 and may be commonly used in two intakes. When air is sucked under the operation of the fan 528, the two air portions are respectively sucked from both intakes.

A sensor that measures the concentration of ammonia in the suctioned air through the air intake or in the air around the air intake is provided at a position adjacent to each intake. The ammonia concentration is measured using a sensor that measures each ammonia concentration. When the ammonia concentration is high in the air suctioned from each intake, the degree to which each of the air intakes 523 and 526 is opened using each of the dampers 522 and 527 is reduced.

When the concentration of ammonia in the air suctioned from one of the first air intake 523 and the second air intake 526 is high, the flow rate of the air suctioned under the operation of the fan 528 may be reduced.

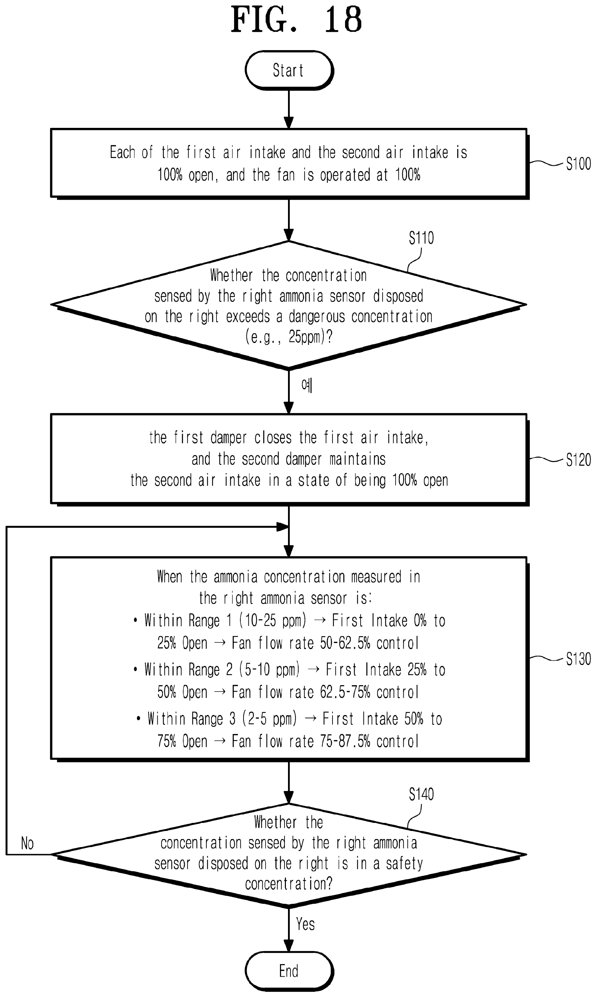

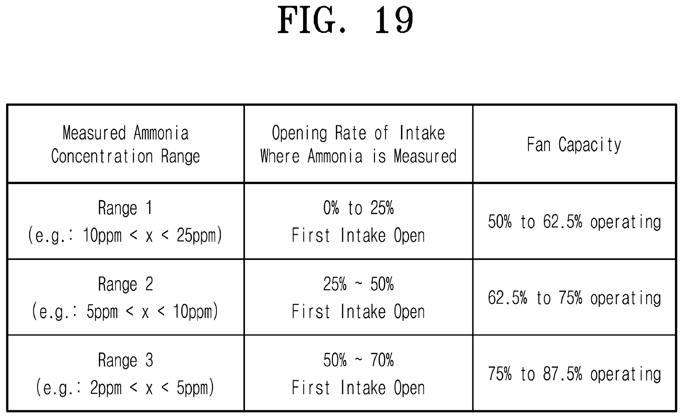

Referring to FIGS. 18 and 19, in a normal situation, that is, when the ammonia detection sensor does not detect ammonia in the air or detects the normal concentration thereof therein, each of the first air intake 523 and the second air intake 526 is100% open, the fan 528 is operated at 100%, and air is sucked through each of the first air intake 523 and the second air intake 526 in S100.

For example, it may be assumed that the concentration sensed by the right ammonia sensor disposed on the right is a dangerous concentration in S110. In this regard, the dangerous concentration may be divided into three concentration ranges as shown in FIG. 19. In response thereto, the degree by which each air intake is opened, and the capacity of the fan may be changed. When the concentration of ammonia measured by the ammonia concentration sensor is high, the damper of the corresponding air intake is controlled to reduce the degree of opening of the air intake, and the capacity of the fan 528 is reduced to reduce the amount of air sucked into the accommodation 510 through the air intake.

Since the dangerous concentration is detected by the right ammonia sensor, the first damper 522 located at the right side closes the first air intake 523, and the second damper 527 maintains the second air intake 526 in a state of being 100% open in S120.

The concentration of ammonia measured by the ammonia sensor is divided into three ranges, and the capacity of the fan 528 is controlled to be maintained at the capacity set in the corresponding range in S130.

The ammonia concentration is continuously measured in the right ammonia sensor disposed adjacent to the second air intake 526, and a change in the measured ammonia concentration is examined in S140. When the ammonia concentration measured by the ammonia sensor is out of the dangerous range, the situation is terminated, the first air intake 523 is 100% open, and the fan 528 is also controlled to be operated at the capacity of 100%. The deviation from the risk range may mean a situation in which the ammonia concertation level is lower than the third range illustrated in FIG. 19.

Although the above description sets forth an example in which the ammonia concentration on the right side of the accommodation 510 is increased, this may be similarly applied to the case in which the ammonia concentration on the left side of the accommodation 510 is increased. In this case, not the first air intake but the second air intake is controlled to be closed.

FIGS. 20 to 21 are diagrams for illustrating another technical concept commonly applicable to the above-described embodiments.

As described above, the vessel of the present embodiment includes the fuel tank 10 in which ammonia fuel is stored and the engine 20 to which the ammonia stored in the fuel tank 10 is supplied and which combusts the same.

Accordingly, there is a possibility that ammonia gas leaks from various places as well as the fuel tank 10 and the engine 20 depending on the situation.

In the present embodiment, a technique capable of preventing an operator from being injured by the leaked ammonia gas is presented.

The vessel of the present embodiment includes a partitioned work space 600 in which ammonia gas is likely to leak, doors 610 and 620 through which the operator can enter and exit the work space 600, lockers 614 and 624 that lock the doors not to be opened, alarm buttons 612 and 622 that check entry or non-entry of the operator into the work space when entering the work space through the door, a gas detector 630 provided in the work space and detecting ammonia gas concentration, and a fan 640 ventilating the air of the work space with external air. In one example, the vessel may include an operator detection sensor 650 for detecting whether an operator enters the work space.

It is possible to determine whether the operator is present in the work space 600 using the alarm buttons 612 and 622 or the operator detection sensor 650.

The door may include a first door 610 and a second door 620. Accordingly, the operator may enter the work space through any one of the first and second doors 610 and 620 and then exit the work space through any one of the first and second doors 610 and 620.

The alarm button includes a first alarm button 612 provided on the first door 610 and a second alarm button 622 provided on the second door 620. It is possible for the operator to check the operator entering the work space 600 or leaving the work space 600 through each door using each alarm button. The first alarm button 612 and the second alarm button 622 may interwork with each other so that the operator may check the entry using one of the first alarm button 612 and the second alarm button 622 and check the exit using one thereof.

The work space 600 may be a CPR (Cargo Compressor Room).

Referring to FIG. 20, it is detected whether the concentration of ammonia detected in the work path or in the closed area, that is, in the work space, exceeds the dangerous concentration in S200.

In response to that the concentration of ammonia exceeds the dangerous concentration, various measures can be taken for the safety of the operator.

First, whether the operator is present in the work space is detected through the alarm buttons 612 and 622 and the operator detection sensor 65 in S210.

When the operator is present therein, the fan 640 for ventilating the inside of the work space 600 is operated at 100 to 150%, thereby increasing the ventilation rate in S220.

When the operator is detected in the work space, the fan is continuously driven. When the operator is not detected therein, the capacity of the fan is reduced, and all the doors are locked by the lockers 614 and 624 that lock the respective doors in S230 and S240.

The gas detector 630 continuously measures whether the ammonia concentration of the work space 600 is reduced to a level lower than the dangerous concentration. In response to that the ammonia concentration is reduced to the level lower than the dangerous concentration, the lockers 614 and 624 release the lock and allow the operator to enter the work space through all the doors in S250 and S280.

Upon determination in S210 that no operator is detected in the work space, all the doors are locked using the lockers 614 and 624, and the fan is operated in S260. In this regard, the fan capacity is in a range of 30 to 70%. Alternatively, the fan may operate at 100% or lower.

The gas detector 630 continuously measures whether the ammonia concentration of the work space 600 is reduced to a level lower than the dangerous concentration. When the ammonia concentration is reduced to the level lower than the dangerous concentration, the lockers 614 and 624 release the lock and allow the operator to enter the work space through all the doors in S270 and S280.

In the present embodiment, when the ammonia concentration in the work space 600 is greater than or equal to a predetermined value and the operator is not in the work space 600, the lockers 614 and 624 lock the doors 610 and 620 to prevent the operator from entering the work space 600.

On the contrary, when the ammonia concentration inside the work space 600 is reduced to a predetermined value or less, the lockers 614 and 624 unlock the door so that the operator can enter the work space through the doors 610 and 620.

When the ammonia concentration inside the work space is equal to or greater than a predetermined value, in a situation in which the operator is in the work space, the fan is driven faster than in a situation in which the operator is not in the work space, thereby securing the safety of the operator.

FIG. 22 is a diagram illustrating still another technical concept commonly applicable to the above-described embodiments.

The vessel of the present embodiment includes the vent mast 8 for discharging gas and the accommodation 510. A distance between the accommodation 510 and a propeller 2 may be greater than the distance between the propeller 2 and the vent mast 8.

Along the forward movement direction of the vessel, the vent mast 8 and the accommodation 510 are sequentially arranged with each other.

The exhaust gas is discharged from the vent mast 8. The exhaust gas flows to the accommodation 510 as a space in which the operator lives or works, so that the gas may cause a bad effect on the operator. Therefore, the accommodation 510 is disposed at the front side and the vent mast 8 is disposed at the rear side along the forward movement direction of the vessel, so that the exhaust gas discharged from the vent mast 8 does not flow to the accommodation 510.

FIG. 23 is a diagram illustrating still yet another technical concept commonly applicable to the above-described embodiments. FIG. 23A is a side view of the vessel, and FIG. 23b is a top view of the vessel.

The vessel of the present embodiment includes the accommodation 510, an engine room 700 which is disposed under the accommodation and in which an engine is disposed, an engine control room 710 which is disposed under the accommodation and in which a device for controlling the engine is disposed, and a passage 720 connecting the engine control room 710 to the accommodation 510.

That is, the engine room 700 and the engine control room 710 are separated from each other. The engine control room 710 is separated from the engine room 700 by a partition 712 so that the operator cannot move from the engine room 700 to the engine control room 710. Accordingly, even in a situation in which a gas such as ammonia leaks from the engine room 700, the gas may be prevented from being introduced into the engine control room 710.

A staircase connecting the accommodation 510 located at an upper level and the engine control room 710 located at a lower level to each other may be disposed in the passage 720. The staircase may connect two spaces of different vertical levels to each other, allowing operators to move therebetween. Accordingly, the accommodation 510 located at the upper level and the engine control room 710 located at the lower level are connected to each other via the staircase, so that the operator may move from the accommodation 510 to the engine control room 710.

The present disclosure is not limited to the above-described embodiments. As being appreciated from the appended claims, the present disclosure may be modified by a person having ordinary skill in the art to which the present disclosure belongs, and such modification falls within the scope of the present disclosure.

### [First Example]

### [Item 1 of Example 1]

A vessel comprising:
a fuel tank in which ammonia fuel is stored;
an engine configured to receive ammonia stored in the fuel tank and combust the received ammonia;
a first tank in which liquid ammonia discharged from the engine is collected; and
a second tank in which gaseous ammonia discharged from the engine is collected,
wherein the liquid ammonia is collected in the first tank, and then the gaseous ammonia is collected in the second tank.

### [Item 2 of Example 1]

The vessel of item 1,
wherein when the concentration of the gaseous ammonia collected in the second tank decreases to a value lower than or equal to a predetermined reference value, the gaseous ammonia of a low concentration is collected in a flow path different from a flow path connected to the first tank and the second tank.

[Item 3 of Example 1]

The vessel of item 2, further including:
a first valve configured to open and close a flow path extending from the engine to the first tank; and
a second valve configured to open and close a flow path extending from the engine to the second tank,
wherein the second valve closes the flow path when the first valve opens the flow path.

### [Item 4 of Example 1]

The vessel of item 3, the vessel comprising a third valve configured to open and close a flow path extending from the second valve to the second tank.

### [Item 5 of Example 1]

The vessel of item 4,
wherein the second valve opens the flow path, and the third valve opens the flow path, while a high concentration of gaseous ammonia is discharged from the engine.

### [Item 6 of Example 1]

The vessel of item 4,
wherein the second valve opens a flow path and the third valve closes the flow path while gas ammonia of a low concentration is discharged from the engine.

### [Item 7 of Example 1]

The vessel of item 3,
wherein while ammonia is discharged from the engine, the second valve closes the flow path, and
after a predetermined time has elapsed, the second valve opens the flow path.

### [Item 8 of Example 1]

The vessel of item 4,
wherein while gaseous ammonia is discharged from the engine, the third valve opens the flow path, and
after a predetermined time has elapsed, the third valve closes the flow path.

### [Item 9 of Example 1]

The vessel of item 1,
wherein a pressure of the first tank is maintained to be higher than a pressure of the second tank.

### [Item 10 of Example 1]

The vessel of item 9,
the vessel comprising a flow path for supplying nitrogen to the first tank to maintain the pressure of the first tank.

### [Item 11 of Example 1]

The vessel of item 1,
the vessel comprising a flow path configured to guide the ammonia collected in the first tank to a fuel supply pump.

### [Item 12 of Example 1]

A method for controlling a vessel, wherein the vessel in which ammonia fuel is burned in the engine includes: a fuel tank in which the ammonia fuel is stored;
an engine configured to receive ammonia stored in the fuel tank and combust the received ammonia;
a first tank in which liquid ammonia discharged from the engine is collected; and
a second tank in which gaseous ammonia discharged from the engine is collected,
wherein the method includes: a first step in which the engine is driven with ammonia fuel and is stopped;
a second step in which liquid ammonia remaining in the engine is guided to the first tank; and
a third step of collecting gaseous ammonia remaining in the engine into the second tank.

### [Item 13 of Example 1]

The method of item 12, including:
after the third step,
a fourth step of discharging gaseous ammonia to a flow path other than a flow path to the first tank and the second tank,
wherein a concentration of gaseous ammonia discharged in the fourth step is lower than a concentration of gaseous ammonia discharged in the third step.

### [Item 14 of Example 1]

The method of item 13, the method comprising:
after the second step,
returning liquid ammonia stored in the first tank to the fuel supply pump.

### [Item 15 of Example 1]

The method of item 13,
wherein the second step includes:
injecting nitrogen gas into the first tank to maintain a pressure of the first tank at a level equal to or higher than a predetermined pressure.

### [Item 16 of Example 1]

The method of item 13,
wherein the second step includes:
injecting nitrogen gas into the engine such that liquid ammonia remaining in the engine is discharged from the engine.

### [Second Example]

### [Item 1 of Example 2]

A vessel comprising: a fuel tank in which ammonia fuel is stored;
an engine configured to receive ammonia stored in the fuel tank and combust the received ammonia; and
a tank in which liquid ammonia or gaseous ammonia discharged from the engine is collected,
wherein the liquid ammonia flows from the engine to the tank, and then, the gaseous ammonia flows from the engine to the tank.

[Item 2 of Example 2]

The vessel of item 1,
wherein a pressure of the tank when the liquid ammonia flows from the engine to the tank is greater than a pressure of the tank when the gas ammonia flows from the engine to the tank.

### [Item 3 of Example 2]

The vessel of item 1,
wherein the liquid ammonia is collected in the tank, and then, a high concentration of gaseous ammonia is collected in the tank.
wherein the gaseous ammonia of the high concentration is collected and then, the ammonia of the low concentration is collected in a flow path different from a flow path to the tank.

### [Item 4 of Example 2]

The vessel of item 3, including:
a first flow path through which the gaseous ammonia stored in the tank is discharged from the tank; and
a first valve configured to open and close the first flow path,
wherein the first valve is a pressure control valve.

### [Item 5 of Example 2]

The vessel of item 4,
wherein the first valve is controlled such that:
a pressure of the tank while liquid ammonia flows from the engine to the tank is maintained to be greater than
a pressure of the tank while the gaseous ammonia flows from the engine to the tank.

### [Item 6 of Example 2]

The vessel of item 3, including:
a second flow path through which the liquid ammonia stored in the tank is discharged from the fuel tank; and
a second valve configured to open and close the second flow path.

### [Item 7 of Example 2]

The vessel of item 6,
wherein the second valve closes the second flow path while liquid ammonia flows from the engine to the tank.

### [Item 8 of Example 2]

The vessel of item 6,
wherein the second valve closes the second flow path while gaseous ammonia flows from the engine to the tank.

### [Item 9 of Example 2]

The vessel of item 6,
wherein the second valve closes the second flow path while gas ammonia is discharged from the tank to the outside of the tank.

### [Item 10 of Example 2]

A method for controlling a vessel, the vessel comprising: a fuel tank in which ammonia fuel is stored;
an engine configured to receive ammonia stored in the fuel tank and combust the received ammonia; and
a tank in which liquid ammonia or gaseous ammonia discharged from the engine is collected,
wherein the method includes: a first step in which the engine is driven with ammonia fuel and is stopped;
a second step in which liquid ammonia remaining in the engine is guided to the tank; and
a third step of collecting gaseous ammonia remaining in the engine into the tank.

### [Item 11 of Example 2]

The method of item 10, comprising:
after the third step,
a fourth step of discharging gaseous ammonia to a flow path other than the tank,
wherein a concentration of gaseous ammonia discharged in the fourth step is lower than a concentration of gaseous ammonia discharged in the third step.

### [Item 12 of Example 2]

The method of item 11, comprising:
after the second step is finished and before the third step is performed,
returning liquid ammonia stored in the first tank to the fuel tank.

### [Item 13 of Example 2]

The method of item 12,
wherein after the returning step has been completed, the third step is performed while the pressure of the tank is lowered.

### [Item 14 of Example 2]

The method of item 10,
wherein the second step includes blocking an outlet flow path of the tank to control the pressure of the tank to increase.

### [Item 15 of Example 2]

The method of item 10,
wherein the second step includes injecting nitrogen gas into the engine such that the liquid ammonia remaining in the engine is discharged from the engine.

### [Third Example]

### [Item 1 of Example 3]

A vessel comprising: a fuel tank in which ammonia fuel is stored;
an engine configured to receive ammonia stored in the fuel tank and combust the received ammonia;
a flow path for guiding liquid ammonia discharged from the engine to the fuel tank;
a tank in which ammonia discharged from the engine is collected; and
a non-condensable treatment apparatus configured to treat a non-condensable gas in the fuel tank.

### [Item 2 of Example 3]

The vessel of item 1,
wherein the non-condensable treatment apparatus includes:
a compressor for compressing the gas in the fuel tank; and
a gas-liquid separator separating a fluid compressed by the compressor into liquid and gas.

### [Item 3 of Example 3]

The vessel of item 2,
wherein the liquid ammonia separated from the fluid by the gas-liquid separator is guided to the fuel tank.

### [Item 4 of Example 3]

The vessel of item 3, comprising:
a buffer tank configured to store therein the gas separated from the fluid by the gas-liquid separator,
wherein the gas includes the gaseous ammonia and the non-condensable gas.

### [Item 5 of Example 3]

The vessel of item 4,
wherein the gaseous ammonia and the non-condensable gas discharged from the buffer tank are mixed with the gaseous ammonia discharged from the engine and the mixture flows.

### [Item 6 of Example 3]

The vessel of item 2, comprising:
a heat exchanger provided at an outlet end of the compressor to cool a fluid discharged from the compressor.

### [Item 7 of Example 3]

The vessel of item 6,
wherein the heat exchanger is disposed between the compressor and the gas-liquid separator.

### [Item 8 of Example 3]

The vessel of item 1, comprising:
a valve provided in the flow path and configured to control a flow of liquid ammonia discharged from the engine.

### [Item 9 of Example 3]

The vessel of item 8,
wherein when the valve opens the flow path, liquid ammonia discharged from the engine flows to the fuel tank,
wherein when the valve closes the flow path, the flow of liquid ammonia in the engine is blocked.

### [Item 10 of Example 3]

The vessel of item 1,
wherein the non-condensable treatment apparatus is always driven.

### [Item 11 of Example 3]

The vessel of item 10,
wherein the non-condensable treatment apparatus is driven while the engine is driven.

### [Item 12 of Example 3]

The vessel of item 10,
wherein the non-condensable treatment apparatus is driven while the engine is stopped.

### [Item 13 of Example 3]

A vessel comprising: a fuel tank in which ammonia fuel is stored;
an engine configured to receive ammonia stored in the fuel tank and combust the received ammonia;
a first tank in which liquid ammonia discharged from the engine is collected;
a second tank in which gaseous ammonia discharged from the engine is collected; and
a non-condensable treatment apparatus configured to extract a non-condensable gas from the fuel tank,
wherein the liquid ammonia is collected in the first tank, and then the gaseous ammonia is collected in the second tank.

### [Item 14 of Example 3]

The vessel of item 13,
wherein the non-condensable treatment apparatus includes:
a compressor for compressing the gas in the fuel tank; and
a gas-liquid separator separating a fluid compressed by the compressor into liquid and gas.

### [Item 15 of Example 3]

The vessel of item 13,
wherein the liquid ammonia separated from the fluid by the gas-liquid separator is guided to the fuel tank.

### [Fourth Example]

### [Item 1 of Example 4]

A vessel comprising: an accommodation; and
a scrubber for purifying the air sucked through an air intake of the accommodation,
wherein the scrubber includes:
an ammonia reaction unit,
a cleaning water storage unit, and
a valve configured to open and close a flow path through which the air discharged from the scrubber flows,
wherein while the air supplied to the scrubber circulates through the ammonia reaction unit and the cleaning water storage unit, the amount of the ammonia therein is lowered,
wherein the scrubber is operated in a varying manner according to a concentration of ammonia contained in the air supplied from the scrubber.

### [Item 2 of Example 4]

The vessel of item 1,
wherein the scrubber is operated in a varying manner based on the different ammonia concentrations of the ammonia contained in the air, wherein the different ammonia concentrations include high concentration, medium concentration, and normal concentration steps.

### [Item 3 of Example 4]

The vessel of item 2,
wherein when the ammonia concentration of the ammonia contained in the air is the normal concentration,
the scrubber circulates air in a closed loop, purifies the air, and supplies the purified air to the flow path.

### [Item 4 of Example 4]

The vessel of item 2,
wherein when the ammonia concentration of the ammonia contained in the air is the medium concentration,
the scrubber circulates air in a closed loop, purifies the air, and supplies the purified air to the flow path,
wherein new cleaning water is supplied to the cleaning water storage unit.

### [Item 5 of Example 4]

The vessel of item 2,
wherein when the ammonia concentration of the ammonia contained in the air is the high concentration,
the valve blocks the flow path such that the air discharged from the scrubber is not supplied to the flow path.

### [Item 6 of Example 4]

A vessel comprising: an accommodation; and
a scrubber for purifying the air sucked through an air intake of the accommodation,
wherein the air intake includes:
   a first air intake provided at the right side of the accommodation when being viewed in the forward movement direction of the vessel; and
   a second air intake provided at the left side of the accommodation when being viewed in the forward movement direction of the vessel,
   wherein the air suctioned in the first air intake and the second air intake are guided to the scrubber through a duct.

### [Item 7 of Example 4]

The vessel of item 6, comprising
a first damper configured to block air suctioned from the first air intake; and
a second damper configured to block air suctioned from the second air intake.

### [Item 8 of Example 4]

The vessel of item 7,
wherein the degree to which each of the air intakes is opened using each of the dampers is reduced when the ammonia concentration in the air sucked in from each of the air intakes is high.

### [Item 9 of Example 4]

The vessel of item 6, comprising:
a fan configured to adjust an air volume of air suctioned through each of the first air intake and the second air intake.

### [Item 10 of Example 4]

The vessel of item 9,
wherein a flow rate of the air suctioned under the operation of the fan is reduced when an ammonia concentration in the air suctioned through one of the first air intake and the second air intake is high.

### [Item 11 of Example 4]

A vessel comprising: a fuel tank in which ammonia fuel is stored;
an engine configured to receive ammonia stored in the fuel tank and combust the received ammonia;
a partitioned work space where ammonia gas is likely to leak;
a door allowing or disallowing access to the work space;
a locker that locks the door so that it does not open;
an alarm button for checking entry or non-entry of the operator when the operator enters the work space through the door;
a gas detector provided in the work space and sensing an ammonia gas concentration therein; and
a fan configured to ventilate the air of the work space with external air,
wherein the locker locks the door when an ammonia concentration in the work space is equal to or greater than a predetermined value and an operator is not in the work space.

### [Item 12 of Example 4]

The vessel of item 11,
wherein when the ammonia concentration in the work space is equal to or greater than a predetermined value,

A vessel, characterized in that, in a situation where an operator is in the work space, the fan is driven faster than in a situation where the operator is not in the work space.

### [Item 13 of Example 4]

The vessel of item 11,
wherein when the ammonia concentration in the work space is reduced to a predetermined value or lower,
the locker releases the door lock.

### [Item 14 of Example 4]

The vessel of item 11,
wherein the entrance door includes a first entrance door and a second entrance door,
wherein the alarm button includes:
a first alarm button provided at the first door;
a second alarm button provided at the second door,
wherein the first alarm button and the second alarm button interwork with each other so that an operator checks an entry using one of the first alarm button and the second alarm button, and checks an exit using one of the first alarm button and the second alarm button.

### [Item 15 of Example 4]

The vessel of item 11, comprising:
a vent mast; and
an accommodation;
wherein a distance between the accommodation and the propeller is greater than the distance and the propeller and the vent mast,
wherein along the forward movement direction of the vessel,
the accommodation is disposed at a front side,
the vent mast is disposed at a rear side.

## Claims

1. A vessel comprising:
a fuel tank in which ammonia fuel is stored;
an engine configured to receive ammonia stored in the fuel tank and combust the received ammonia;
a first tank in which liquid ammonia discharged from the engine is collected; and
a second tank in which gaseous ammonia discharged from the engine is collected,
wherein the liquid ammonia is collected in the first tank, and then the gaseous ammonia is collected in the second tank.

2. The vessel of Claim 1, wherein when a concentration of the gaseous ammonia collected in the second tank decreases to a value lower than or equal to a predetermined reference value, the gaseous ammonia of a low concentration is collected in a flow path different from a flow path connected to the first tank and the second tank.

3. The vessel of Claim 2, comprising:
a first valve configured to open and close a flow path extending from the engine to the first tank; and
a second valve configured to open and close a flow path extending from the engine to the second tank,
wherein the second valve closes the flow path when the first valve opens the flow path.

4. The vessel of Claim 3, comprising a third valve configured to open and close a flow path extending from the second valve to the second tank.

5. A vessel comprising:
a fuel tank in which ammonia fuel is stored;
an engine configured to receive ammonia stored in the fuel tank and combust the received ammonia; and
a tank in which liquid ammonia or gaseous ammonia discharged from the engine is collected,
wherein the liquid ammonia flows from the engine to the tank, and then, the gaseous ammonia flows from the engine to the tank.

6. The vessel of Claim 5, wherein when a pressure of the tank when the liquid ammonia flows from the engine to the tank is greater than a pressure of the tank when the gas ammonia flows from the engine to the tank.

7. The vessel of Claim 5, wherein the liquid ammonia is collected in the tank, and then, a high concentration of gaseous ammonia is collected in the tank.
wherein the gaseous ammonia of the high concentration is collected therein, and then, the ammonia of the low concentration is collected in a flow path different from a flow path to the tank.

8. The vessel of Claim 7, comprising:
a first flow path through which the gaseous ammonia stored in the tank is discharged from the tank,
a first valve configured to open and close the first flow path,
wherein the first valve is a pressure control valve.

9. A vessel comprising:
a fuel tank in which ammonia fuel is stored;
an engine configured to receive ammonia stored in the fuel tank and combust the received ammonia;
a flow path for guiding liquid ammonia discharged from the engine to the fuel tank;
a tank in which ammonia discharged from the engine is collected; and
a non-condensable treatment apparatus configured to treat a non-condensable gas in the fuel tank.

10. The vessel of Claim 9, wherein the non-condensable treatment apparatus includes:
a compressor for compressing the gas in the fuel tank; and
a gas-liquid separator configured to separate a fluid compressed by the compressor into liquid and gas.

11. The vessel of Claim 10, wherein the liquid ammonia separated from the fluid by the gas-liquid separator is guided to the fuel tank.

12. The vessel of Claim 11, comprising:
a buffer tank configured to store therein the gas separated from the fluid by the gas-liquid separator,
wherein the gas contains the gaseous ammonia and the non-condensable gas.

13. A vessel comprising:
an accommodation; and
a scrubber for purifying air sucked through an air intake of the accommodation,
wherein the scrubber includes:
an ammonia reaction unit;
a cleaning water storage unit; and
a valve configured to open and close a flow path through which the air discharged from the scrubber flows,
wherein while the air supplied to the scrubber circulates through the ammonia reaction unit and the cleaning water storage unit, an ammonia amount therein is lowered,
wherein the scrubber operates in a varying manner based on a concentration of ammonia contained in the air supplied from the scrubber.

14. The vessel of Claim 13, wherein the scrubber operates in a varying manner based on varying ammonia concentrations of the ammonia contained in the air, wherein the varying ammonia concentrations include high concentration, medium concentration, and normal concentration steps.

15. The vessel of Claim 14, wherein when the concentration of ammonia contained in the air is the normal concentration, the scrubber circulates air in a closed loop, purifies the air, and supplies the purified air to the flow path.
